# EUROPEAN PATENT APPLICATION

(11) **EP 1 610 246 A1**
(43) Date of publication of application: **28.12.2005**
(21) Application number: 04723775.5
(22) Date of filing: 26.03.2004
(51) Int. Cl.: G06F 17/60

(54) **INFORMATION PROCESSING SYSTEM, INFORMATION PROCESSING DEVICE, METHOD, AND PROGRAM**

(30) Priority: 28.03.2003 JP 2003092647
(71) Applicant: SONY CORPORATION, Tokyo 141-0001 (JP)
(72) Inventor: ITABASHI, Tatsuo, c/o SONY CORPORATION, Tokyo 1410001 (JP)
(74) Representative: Körber, Martin Hans
(86) International application number: PCT/JP2004/004338
(87) International publication number: WO 2004/088557

(57) **Abstract**

The present invention relates to an information-processing system, which allows a specific apparatus in a movement-destination space to be operated with the anonymity of the user kept as it is even when the user moves to the movement-destination space, information-processing apparatus, information-processing methods and information-processing programs. A mobile terminal 11-2 issues a request for a resource of a resource apparatus 15 managed by a main apparatus 12-1 to a main apparatus 12-2. The main apparatus 12-2 requests the main apparatus 12-1 to approve utilization of the requested source. The main apparatus 12-1 notifies the main apparatus 12-2 of a price required for permitting the utilization of the resource. The main apparatus 12-2 requests a value issuance apparatus 14 to transfer a value in order to make a payment of the price. The value issuance apparatus 14 transfers a value of the main apparatus 12-2 to the main apparatus 12-1 and transmits a payment notification to the main apparatus 12-1. Receiving the payment notification, the main apparatus 12-1 grants a right to utilize the resource to the mobile terminal 12-2 by way of the main apparatus 12-2. The present invention can be applied to a radio communication system.

## Description

### Technical Field

The present invention relates to an information-processing system, information-processing apparatus, information-processing methods and programs. More particularly, the present invention relates to an information-processing system, information-processing apparatus, information-processing methods and information-processing programs, which allows a specific apparatus in a movement-destination space to be operated with operability adjusted to favorites of the user and with the anonymity kept as it is even when the user moves to the movement-destination space.

### Background Art

In recent years, notebook PCs and cell telephones have been becoming popular. A large number of users carries these compact apparatus each having a communication function and an information-processing function, connecting the apparatus to a network in order to carry out communications through the network at an outdoors location or at a movement-destination location.

In this case, as a system making use of the existing infrastructure, a document such as Japanese Patent Laid-open No. Hei 8-56263 discloses a proposed personal communication service distribution system utilizing a variety of existing communication networks by properly selecting one of the networks from time to time. This personal communication service distribution system is a system making use of an integrated network obtained as a result of integration of communication networks offering different services such as an email service and a telephone service.

In the case of such a personal communication service distribution system, however, in a situation wherein the user is away from home, for example, a message can be delivered to the user but the user is not capable of utilizing an apparatus close to the user in a way adjusted to the user. As a result, the user needs to carry on own terminal (PC) adjusted to the user.

In order to solve the problem described above, as disclosed in Japanese Patent Laid-open No. 2003-292587, applicants for a patent of the present invention have earlier proposed a system in which the user is allowed to store information such as favorites of the user itself in a home server installed at the home of the user and the operation of an apparatus existing away from home is modified on the basis of the stored information.

With this method, however, it is feared that the balance between a supply and a demand cannot be established in case there are a user who keeps using a resource of another person in a one-sided manner and a user who keeps providing a resource owned by the user itself in spite of the fact that there are only few opportunities at which a resource of another person is utilized.

Thus, a system for solving this other problem is required. This system pays a price, which must be paid by a user utilizing a resource owned by another person, through an apparatus for managing prices the user and other persons have to pay.

For such a system, there is conceived a method for handling prices offered by resource providers and prices to be paid by resource users. Such a method is typically based on use of credit-card numbers.

Since a credit-card number is a kind of information on privacy, there is resistance against disclosure of a credit-card number to others. In addition, in order for a user to make use of a credit card, the user must register personal information of its own in a company handling the credit card. That is to say, an apparatus for managing prices manages personal information of the user itself. Thus, the user pays a price to the apparatus for managing prices under anonymity. As a result, it is difficult to make use of a resource owned by another person.

In consequence, it is difficult to provide the user with a seamless service from a LAN (Local Area Network)-based entrepreneur providing communication services at prices at a public market place.

### Disclosure of Invention

The present invention addresses the above-identified and other problem and provides a capability allowing the operation of an apparatus in a movement-destination space to be modified on the basis of information owned by the user as personal information including favorites of the user so that, for example, the apparatus can be operated in accordance with an operation method the user is familiar with when the user moves to the movement-destination space and allows a price to utilize the apparatus to be paid with the anonymity kept as it is.

The information-processing system provided by the present invention includes:
a terminal operated by a user;
a first main apparatus for providing a resource;
a second main apparatus for storing personal information of the user; and
a value apparatus for managing electronic values.
The terminal includes:
resource-request signal sender means for transmitting a signal making a request for a resource provided by the first main apparatus to the second main apparatus; and
first utilization-right acquisition means for acquiring a right to utilize a resource provided by the first main apparatus from the second main apparatus; and
the terminal shows the right to utilize a resource provided by the first main apparatus to the first main apparatus before using the resource provided by the first main apparatus. The first main apparatus includes:
   payment-notification receiver means for receiving a payment notification from the value apparatus as a notification informing the first main apparatus that an electronic value representing a price to utilize a resource has been paid from the second main apparatus as an electronic-value payment to the first main apparatus; and
   utilization-right issuance means for issuing a right to utilize a resource to the second main apparatus in accordance with the payment notification; and
   the first main apparatus allows the terminal to utilize a resource provided by the first main apparatus when the terminal shows a right to utilize the resource.

The second main apparatus includes:
electronic-value payment request means for requesting the value apparatus to make an electronic-value payment for an electronic value to the first main apparatus in accordance with a signal received from the terminal as a signal making a request for a resource;
second utilization-right acquisition means for acquiring a utilization right, which is issued by the first main apparatus as a right to utilize a resource, in accordance with an electronic-value payment; and
utilization-right presentation means for providing a utilization right acquired by the second utilization-right acquisition means as a right to utilize a resource to the terminal. The value apparatus includes:
   electronic-value payment means for making an electronic-value payment to the first main apparatus in accordance with a request received from the second main apparatus; and
   payment-notification sender means for transmitting a payment notification to the first main apparatus to notify the first main apparatus of the electronic-value payment.

A first information-processing apparatus provided by the present invention includes:
resource-request signal sender means for transmitting a signal making a request for a resource provided by a first main apparatus, which is used for providing the resource to the first information-processing apparatus, to a second main apparatus for storing personal information of a user; and
utilization-right acquisition means for acquiring a right to utilize a resource provided by the first main apparatus from the second main apparatus. The right to utilize a resource provided by the first main apparatus is shown to the first main apparatus before the resource provided by the first main apparatus can be utilized.

The first information-processing apparatus may further include authentication means for authenticating a user in conjunction with the second main apparatus as a valid user corresponding to personal information stored in the second main apparatus.

The resource-request signal sender means and the utilization-right acquisition means may exchange information with the second main apparatus through the first main apparatus.

The resource-request signal sender means and the utilization-right acquisition means may exchange data with the second main apparatus by encrypting the data.

The resource can be an apparatus, information or a license issued for information.

An information-processing method adopted by the first information-processing apparatus provided by the present invention includes the steps of:
transmitting a signal making a request for a resource provided by a first main apparatus, which is used for providing the resource to the first information-processing apparatus, to a second main apparatus for storing personal information of a user; and
acquiring a right to utilize a resource provided by the first main apparatus from the second main apparatus. The right to utilize a resource provided by the first main apparatus is shown to the first main apparatus before the resource provided by the first main apparatus can be utilized.

A program to be executed by the first information-processing apparatus provided by the present invention includes the steps of:
transmitting a signal making a request for a resource provided by a first main apparatus, which is used for providing the resource to the first information-processing apparatus, to a second main apparatus for storing personal information of a user; and
acquiring a right to utilize a resource provided by the first main apparatus from the second main apparatus. The right to utilize a resource provided by the first main apparatus is shown to the first main apparatus before the resource provided by the first main apparatus can be utilized.

A second information-processing apparatus provided by the present invention includes:
payment-notification receiver means for receiving a payment notification from a value apparatus for managing electronic values as a notification informing the second information-processing apparatus that an electronic value representing a price to utilize a resource has been paid from a main apparatus for storing personal information of users as an electronic-value payment to the second information-processing apparatus; and
utilization-right issuance means for issuing a right to utilize a resource provided by the second information-processing apparatus to the main apparatus in accordance with the payment notification. A terminal is allowed to utilize a resource provided by the second information-processing apparatus if the terminal shows a right to utilize the resource to the second information-processing apparatus.

The second information-processing apparatus may further include authentication means for authenticating the value apparatus in conjunction with the value apparatus as a valid apparatus authorized to manage electronic values.

The second information-processing apparatus may further include other authentication means for authenticating a payment notification as a valid notification.

The resource can be an apparatus, information or a license issued for information.

An information-processing method adopted by the second information-processing apparatus provided by the present invention includes the steps of:
receiving a payment notification from a value apparatus for managing electronic values as a notification informing the second information-processing apparatus that an electronic value representing a price to utilize a resource has been paid from a main apparatus for storing personal information of users as an electronic-value payment to the second information-processing apparatus; and
issuing a right to utilize a resource provided by the second information-processing apparatus to the main apparatus in accordance with the payment notification. A terminal is allowed to utilize a resource provided by the second information-processing apparatus if the terminal shows a right to utilize the resource to the second information-processing apparatus.

A program to be executed by the second information-processing apparatus provided by the present invention includes the steps of:
receiving a payment notification from a value apparatus for managing electronic values as a notification informing the second information-processing apparatus that an electronic value representing a price to utilize a resource has been paid from a main apparatus for storing personal information of users as an electronic-value payment to the second information-processing apparatus; and
issuing a right to utilize a resource provided by the second information-processing apparatus to the main apparatus in accordance with the payment notification. A terminal is allowed to utilize a resource provided by the second information-processing apparatus if the terminal shows a right to utilize the resource to the second information-processing apparatus.

A third information-processing apparatus provided by the present invention includes:
electronic-value payment request means requesting a value apparatus for managing electronic values to make an electronic-value payment, which is a payment for an electronic value representing a price to provide a resource from a main apparatus for providing the resource to a terminal, to the main apparatus in accordance with a request made by the terminal;
utilization-right acquisition means for acquiring a utilization right, which is issued by the main apparatus as a right to utilize a resource provided by the main apparatus, in accordance with an electronic-value payment; and
utilization-right presentation means for providing a utilization right acquired by the utilization-right acquisition means as a right to utilize a resource to the terminal.

The third information-processing apparatus may further include authentication means for authenticating the value apparatus in conjunction with the value apparatus as a valid apparatus authorized to manage electronic values.

The third information-processing apparatus may further include other authentication means for authenticating a user in conjunction with a terminal as a valid user corresponding to personal information.

The resource can be an apparatus, information or a license issued for information.

An information-processing method adopted by the third information-processing apparatus provided by the present invention includes the steps of:
requesting a value apparatus for managing electronic values to make an electronic-value payment, which is a payment for an electronic value representing a price to provide a resource from a main apparatus for providing the resource to a terminal, to the main apparatus in accordance with a request made by the terminal;
acquiring a utilization right, which is issued by the main apparatus as a right to utilize a resource provided by the main apparatus, in accordance with an electronic-value payment; and
providing a utilization right acquired by the utilization-right acquisition step as a right to utilize a resource to the terminal.

A program to be executed by the third information-processing apparatus provided by the present invention includes the steps of:
requesting a value apparatus for managing electronic values to make an electronic-value payment, which is a payment for an electronic value representing a price to provide a resource from a main apparatus for providing the resource to a terminal, to the main apparatus in accordance with a request made by the terminal;
acquiring a utilization right, which is issued by the main apparatus as a right to utilize a resource provided by the main apparatus, in accordance with an electronic-value payment; and
providing a utilization right acquired by the utilization-right acquisition step as a right to utilize a resource to the terminal.

A fourth information-processing apparatus provided by the present invention is includes:
electronic-value payment means for making an electronic-value payment to a first main apparatus for providing a resource to a terminal operated by a user as a payment, which is made for a price to provide the source from the first main apparatus to the terminal, in accordance with a request made by a second main apparatus for storing personal information of the user; and
payment-notification sender means for transmitting a payment notification to the first main apparatus to notify the first main apparatus of the electronic-value payment made to the first main apparatus from the second main apparatus.

The fourth information-processing apparatus may further include authentication means for authenticating the fourth information-processing apparatus itself in conjunction with the first and second main apparatus as a valid apparatus for managing electronic values.

The fourth information-processing apparatus may further include storage means for storing electronic values of the first and second main apparatus, and the electronic-value payment means makes an electronic-value payment from the second main apparatus to the first main apparatus by renewing electronic values stored in the storage means.

The electronic-value payment means is also capable of making an electronic-value payment from the second main apparatus to the first main apparatus by acquiring an electronic value from the second main apparatus and transferring the acquired electronic value to the first main apparatus.

An information-processing method adopted by the fourth information-processing apparatus provided by the present invention includes the steps of
making an electronic-value payment to a first main apparatus for providing a resource to a terminal operated by a user as a payment, which is made for a price to provide the source from the first main apparatus to the terminal, in accordance with a request made by a second main apparatus for storing personal information of the user; and
transmitting a payment notification to the first main apparatus to notify the first main apparatus of the electronic-value payment made to the first main apparatus from the second main apparatus.

The resource can be an apparatus, information or a license issued for information.

A program to be executed by the fourth information-processing apparatus provided by the present invention includes the steps of:
making an electronic-value payment to a first main apparatus for providing a resource to a terminal operated by a user as a payment, which is made for a price to provide the source from the first main apparatus to the terminal, in accordance with a request made by a second main apparatus for storing personal information of the user; and
transmitting a payment notification to the first main apparatus to notify the first main apparatus of the electronic-value payment made to the first main apparatus from the second main apparatus.

In accordance with the present invention, a terminal transmits a signal making a request for a resource provided by a first main apparatus to a second main apparatus, and acquires a right to utilize the resource provided by the first main apparatus from the second main apparatus. Then, the terminal shows the right to utilize the resource provided by the first main apparatus to the first main apparatus before using the resource. In addition, the first main apparatus receives a payment notification from a value apparatus as a notification informing the first main apparatus that an electronic value representing a price to utilize a resource provided by the first main apparatus has been paid from the second main apparatus as an electronic-value payment to the first main apparatus, and issues a right to utilize the resource to the second main apparatus in accordance with the payment notification. The first main apparatus allows the terminal to utilize the resource provided by the first main apparatus when the terminal shows the right to utilize the resource to the first main apparatus. On the other hand, the second main apparatus requests the value apparatus to make an electronic-value payment for an electronic value to the first main apparatus in accordance with a signal received from the terminal as a signal making a request for a resource provided by the first main apparatus, and acquires a utilization right, which is issued by the first main apparatus as a right to utilize the resource, in accordance with the electronic-value payment. In addition, the second main apparatus provides the acquired utilization right to the terminal. The value apparatus makes an electronic-value payment to the first main apparatus in accordance with a request received from the second main apparatus, and transmits a payment notification to the first main apparatus to notify the first main apparatus of the electronic-value payment.

### Brief Description of Drawings

Fig. 1 is a block diagram showing a typical configuration of a communication system provided by the present invention;
Fig. 2 is a block diagram showing a typical configuration of a mobile terminal shown in Fig. 1;
Fig. 3 shows a flowchart referred to in explanation of resource acquisition processing carried out by the mobile terminal shown in Fig. 2;
Fig. 4 shows a flowchart referred to in explanation of common private-key authentication processing carried out at steps S2 and S6 of the flowchart shown in Fig. 3;
Fig. 5 shows a flowchart referred to in explanation of resource-information acquisition processing carried out at a step S5 of the flowchart shown in Fig. 3;
Fig. 6 is a block diagram showing a typical configuration of a main apparatus shown in Fig. 1;
Fig. 7 is a block diagram showing a typical configuration of a resource control section shown in Fig. 6;
Fig. 8 shows a flowchart referred to in explanation of resource control processing carried out by the main apparatus shown in Fig. 6;
Fig. 9 shows a flowchart referred to in explanation of resource transmission processing carried out at a step S71 of the flowchart shown in Fig. 8;
Fig. 10 shows a flowchart referred to in explanation of resource transmission processing carried out at a step S71 of the flowchart shown in Fig. 8;
Fig. 11 is a diagram showing a typical electronic certificate;
Fig. 12 shows a flowchart referred to in explanation of resource-information transmission processing carried out by the main apparatus shown in Fig. 6;
Fig. 13 shows a flowchart referred to in explanation of resource-utilization condition text issuance processing carried out by the main apparatus shown in Fig. 6;
Fig. 14 shows a flowchart referred to in explanation of right-text issuance processing carried out by the main apparatus shown in Fig. 6;
Fig. 15 is a block diagram showing a typical configuration of a value issuance apparatus shown in Fig. 1;
Fig. 16 shows a flowchart referred to in explanation of payment-notification transmission processing carried out by the value issuance apparatus shown in Fig. 15;
Fig. 17 is a block diagram showing a typical configuration of an authentication apparatus shown in Fig. 1;
Fig. 18 shows a flowchart referred to in explanation of electronic-certificate authentication processing carried out by the authentication apparatus shown in Fig. 17;
Fig. 19 is an explanatory diagram referred to in explanation of resource acquisition processing carried out by the communication system shown in Fig. 1;
Fig. 20 is a block diagram showing a typical configuration of another system; and
Fig. 21 shows a flowchart referred to in explanation of operations carried out by the other system shown in Fig. 20.

### Best Mode for Carrying out the Invention

Embodiments of the present invention are explained by referring to diagrams as follows.

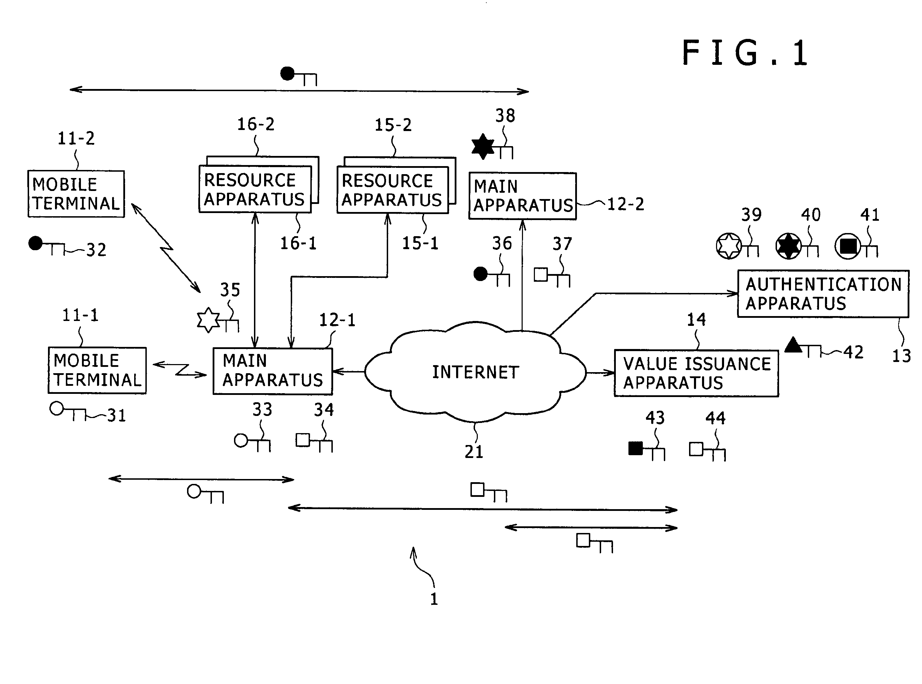

Fig. 1 is a block diagram showing a typical configuration of an information-processing system 1 provided by the present invention.

In this information-processing system 1, security is assured by utilizing an encryption technology of a PKI (Public-key Infrastructure) system adopted in execution of processing between a main apparatus 12 and a value issuance apparatus 14 safely and reliably.

In the typical configuration of the information-processing system 1 shown in Fig. 1, two users own mobile terminals 11-1 and 11-2 respectively. The users each have its personal information such as a utilization history, favorites and accounting data always stored in one main apparatus, and acquire a common private-key as authentication information of the user.

In this embodiment, a user and a main apparatus have the same pass phrase as a common private-key. A user is authenticated by verifying that a user and a main apparatus have the same pass phrase. In this embodiment, the user owning the mobile terminal 11-1 stores its personal information in the main apparatus 12-1 and the user owning the mobile terminal 11-2 stores its personal information in the main apparatus 12-2.

In addition, the mobile terminal 11-1 and the main apparatus 12-1 used for storing the personal information of the user owning the mobile terminal 11-1 are placed at locations allowing the mobile terminal 11-1 and the main apparatus 12-1 to communicate with each other by direct radio communication. On the other hand, the mobile terminal 11-2 and the main apparatus 12-2 used for storing the personal information of the user owning the mobile terminal 11-2 are placed at locations remote from each other. However, the location of the mobile terminal 11-2 and the location of the main apparatus 12-1 allow the mobile terminal 11-2 to communicate with the main apparatus 12-1 by direct radio communication. That is to say, even though the mobile terminal 11-2 is capable of communicating with the main apparatus 12-1 by direct radio communication, the mobile terminal 11-2 is hardly capable of communicating with the main apparatus 12-2.

The mobile terminals 11-1 and 11-2 are both moving with the users operating the mobile terminals 11-1 and 11-2. The mobile terminals 11-1 and 11-2 transmit signals representing commands entered by the users to the main apparatus 12-1 by radio communication. In addition, the mobile terminals 11-1 and 11-2 receive signals transmitted by the main apparatus 12-1 also by radio communication.

In the following description, the mobile terminals 11-1 and 11-2 are each referred to properly as a mobile terminal 11 used as a generic reference numeral for both the mobile terminals 11-1 and 11-2 in case there is no need to distinguish the mobile terminals 11-1 and 11-2 from each other.

There is no dependence relation between the mobile terminal 11 and the user. That is to say, the mobile terminal 11 authenticates the user only when the user is about to utilize the mobile terminal 11. Thus, the mobile terminal 11 has an input function for inputting authentication information of the user.

In the typical configuration shown in Fig. 1, the users operating the mobile terminals 11-1 and 11-2 enter common private-keys 31 and 32 respectively as authentication information of the users.

The main apparatus 12-1 receives signals transmitted from mobile terminal 11, which is placed in a predetermined space, by radio communication and transmits signals to the mobile terminal 11. In addition, the main apparatus 12-1 is connected to a resource apparatus 15-1, a resource apparatus 15-2, a resource apparatus 16-1 and a resource apparatus 16-2, which have resources such as contents to be provided to users as information. Furthermore, the main apparatus 12-1 is also connected to a authentication apparatus 13 and a value issuance apparatus 14 through the Internet 21.

The main apparatus 12-1 is typically the so-called home server installed for example at the home of the user owning the mobile terminal 11-1. By the same token, the main apparatus 12-2 is typically a home server installed for example at the home of the user owning the mobile terminal 11-2.

In the following description, the resource apparatus 15-1 and 15-2 are each referred to properly as a resource apparatus 15 used as a generic reference numeral for both the resource apparatus 15-1 and 15-2 in case there is no need to distinguish the resource apparatus 15-1 and 15-2 from each other. By the same token, the resource apparatus 16-1 and 16-2 are each referred to properly as a resource apparatus 16 used as a generic reference numeral for both the resource apparatus 16-1 and 16-2 in case there is no need to distinguish the resource apparatus 16-1 and 16-2 from each other.

In the configuration described above, the mobile terminal 11 is capable of communicating with the resource apparatus 15 and 16 through the main apparatus 12-1 as well as communicating with other apparatus, which are connected to the Internet 21, through the main apparatus 12-1 and the Internet 21.

In addition, the main apparatus 12-1 is used for storing a common secret-key 33 as authentication information of the user. That is to say, the common secret-key 33 becomes equivalent to the common secret-key 31 entered by the user operating the mobile terminal 11-1. On top of that, the main apparatus 12-1 is also used for storing a common secret-key 34 transmitted by the value issuance apparatus 14 and a secret-key 35 used for proving validity of its own.

The main apparatus 12-2 is connected to the main apparatus 12-1, the authentication apparatus 13 and the value issuance apparatus 14 through the Internet 21.

In addition, the main apparatus 12-2 is used for storing a common secret-key 36 as authentication information of the user. That is to say, the common secret-key 36 becomes equivalent to as the common secret-key 32 entered by the user operating the mobile terminal 11-2. On top of that, the main apparatus 12-1 is also used for storing a common secret-key 37 transmitted by the value issuance apparatus 14 and a secret-key 38 used for proving validity of its own.

In the following description, the main apparatus 12-1 and 12-2 are each referred to properly as a main apparatus 12 used as a generic reference numeral for both the main apparatus 12-1 and 12-2 in case there is no need to distinguish the main apparatus 12-1 and 12-2 from each other.

The authentication apparatus 13 is used for storing a public-key 39 forming a pair in conjunction with the secret-key 35 of the main apparatus 12-1, a public-key 40 forming a pair in conjunction with the secret-key 38 of the main apparatus 12-2 and a public-key 41 forming a pair in conjunction with a secret-key 43 of the value issuance apparatus 14. The secret-key 43 will be described later. In addition, the authentication apparatus 13 is also used for storing a secret-key 42 used for proving validity of its own.

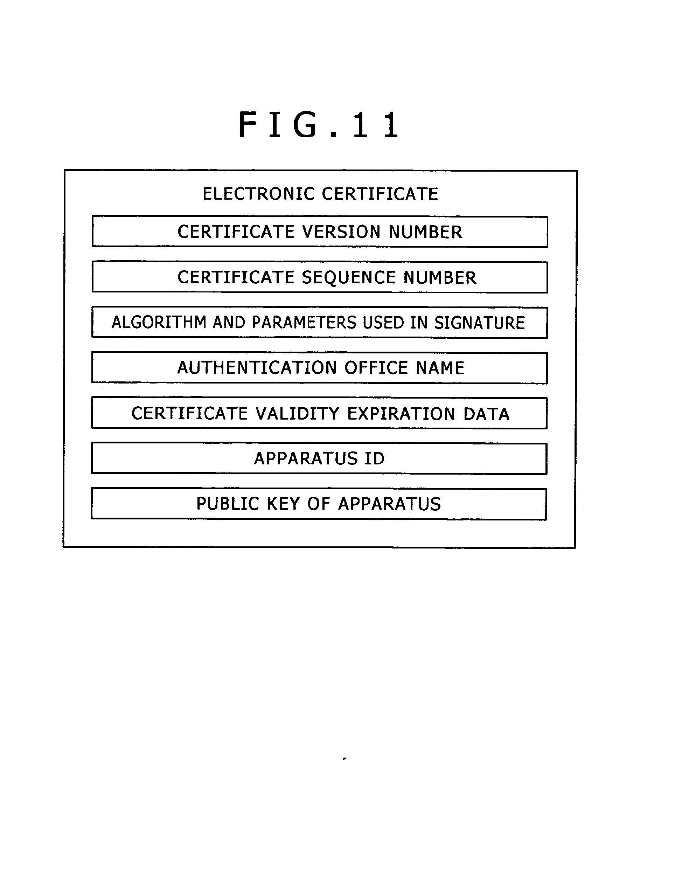

The authentication apparatus 13 searches for a public-key according to a request received from another apparatus and transmits the public-key to the other apparatus. A private-key is associated with a public-key forming a pair in conjunction with the private-key in such a relation that a text encrypted by using one of the keys can be decrypted by using the other key. In addition, the authentication apparatus 13 manages issuance and invalidation of electronic certificates shown in Fig. 11.

The value issuance apparatus 14 is also an apparatus for managing issuance and circulation of values (or, to be more specific, electronic values) for the main apparatus 12-1 and 12-2. The value issuance apparatus 14 is used for storing the aforementioned secret-key 43 used for proving validity of its own and a common secret-key 44. The value issuance apparatus 14 transmits the common secret-key 44 to the main apparatus 12-1 and 12-2, for each of which a value is issued, to be stored in the main apparatus 12-1 and 12-2 as the common secret-keys 34 and 37 respectively. That is to say, the common private-keys 34, 37 and 44 are the same key.

The users have their personal information such as a utilization history, favorites and accounting data always stored in their respective main apparatus 12-1 and 12-2, and acquire the common private-keys 33 and 36. Then, by carrying out all communications through use of these common private-keys 33 and 36, the users are capable of sustaining anonymity and all the communications can be performed safely.

In the embodiment described above, only 2 mobile terminals exist. It is to be noted, however, that a large number of users may move from one place to another. In this case, as many mobile terminals as such users exist in the information-processing system. In addition, while only 2 main apparatus exist in the embodiment described above, in every space, there are as many main apparatus as required in the space.

The common private-keys 31 and 32 are each a key used for authenticating a user operating the mobile terminal 11. The common private-keys 34, 37 and 44 are each a key used for authenticating an apparatus as a valid apparatus for handling values. The private-keys 35, 38 and 43 are each a key used for proving validity of its own so as to avoid interpolations.

In the information-processing system 1 with the configuration described above, let us assume for example that the user operating the mobile terminal 11-2 wants to utilize a resource connected to the main apparatus 12-1 in which the personal information of the user is not stored. In this case, the mobile terminal 11-2 specifies the resource connected to the main apparatus 12-1 as the resource the user wants to utilize and transmits a request for utilization of the resource to the main apparatus 12-2 used for storing the personal information of the user. Receiving the request for utilization of the resource from the mobile terminal 11-2, the main apparatus 12-2 transmits a request for a payment, which is to be made to the main apparatus 12-1 as a payment of a value required for utilizing the resource, to the value issuance apparatus 14.

The value issuance apparatus 14 transfers the value from the main apparatus 12-2 to the main apparatus 12-1 and issues a payment notification to the main apparatus 12-1 as a notification informing the main apparatus 12-1 that a payment of the value to the main apparatus 12-1 has been made.

Receiving the payment notification from the value issuance apparatus 14, the main apparatus 12-1 issues a right to utilize the resource connected to the main apparatus 12-2. The main apparatus 12-2 transmits the right to utilize the resource to the mobile terminal 11-2. The mobile terminal 11-2 presents the right to utilize the resource to the main apparatus 12-1, making a request for the resource. When the mobile terminal 11-2 presents the right to utilize the resource to the main apparatus 12-1, the main apparatus 12-2 allows the mobile terminal 12-2 to utilize the resource.

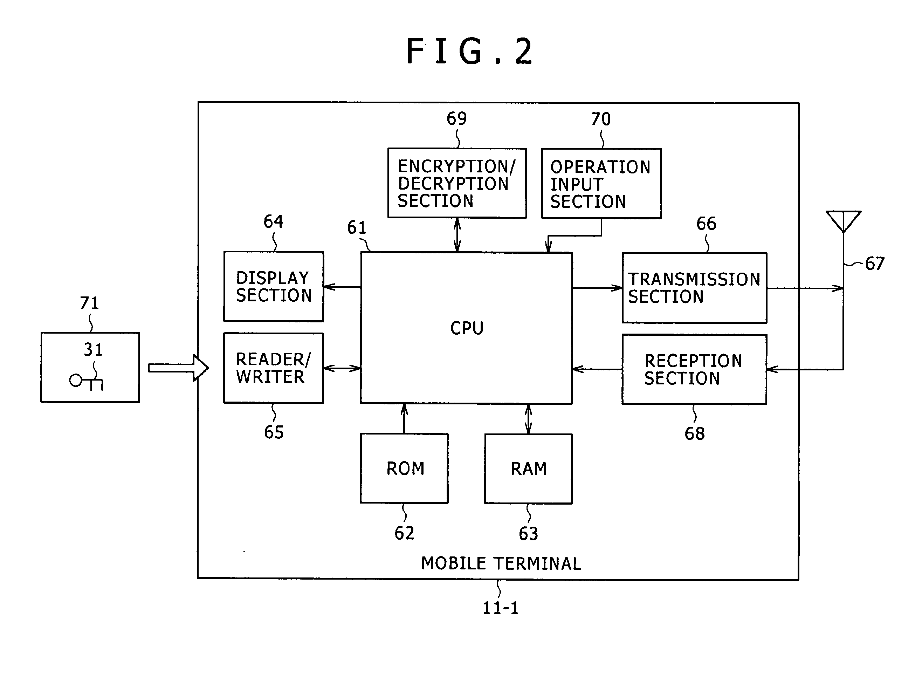

Fig. 2 is a block diagram showing a typical detailed configuration of the mobile terminal 11 employed in the information-processing system 1 shown in Fig. 1.

Fig. 2 shows only a typical configuration of the mobile terminal 11-1 but a typical configuration of the mobile terminal 11-2 is identical with the typical configuration of the mobile terminal 11-1.

As shown in the figure, the mobile terminal 11-1 includes a CPU (Central Processing Unit) 61, a ROM (Read Only memory) 62, a RAM (Random Access Memory) 63, a display section 64, a reader/writer 65, a transmission section 66, an antenna 67, a reception section 68, an encryption/decryption section 69 and an operation input section 70.

It is to be noted that the user operating the mobile terminal 11-1 has a non-contact IC (Integrated Circuit) card 71 used for storing a common secret-key 31 acquired in advance, information on resources connected to the main apparatus 12-1 operated by the user itself and a network address of the main apparatus 12-1.

As described above, by safely storing the common secret-key 31 in a non-contact IC card to make an interpolation difficult to carry out, the safety of the communication system and its convenience can be improved. In addition, since the non-contact IC card has a non-contact interface, the convenience of the utilization of the card can be improved and processing can be performed by carrying out simple operations.

As a non-contact IC card, it is possible to use FeliCa (a trademark), which is an IC chip with high tamper resistant. It is to be noted that the common secret-key 31 and the like can be stored in a contact-type device in place of a non-contact device. If convenience and tolerance for deterioration of the device are taken into consideration, however, it is desirable to use a non-contact device in place of a contact-type device.

The CPU 61 is a unit for carrying out various kinds of processing by execution of programs stored in the ROM 62. The RAM 63 is a memory used for properly storing data required in execution of the various kinds of processing by the CPU 61.

The display section 64 is a unit for displaying typically information on resources that can be used by the mobile terminal 11-1 in accordance with a command issued by the CPU 61. The reader/writer 65 is a unit for reading out data stored in the non-contact IC card 71 owned by the user and supplying the data to the CPU 61 in accordance with a command issued by the CPU 61. The data read out from the non-contact IC card 71 includes the common secret-key 31, information on resources connected to the main apparatus 12-1 used for storing personal information of the user and the network address of the main apparatus 12-1. The reader/writer 65 is also a unit for writing data into the non-contact IC card 71 if necessary in accordance with a command issued by the CPU 61.

The transmission section 66 is a unit for transmitting a signal to the main apparatus 12-1 by way of the antenna 67 in accordance with a command issued by the CPU 61. The antenna 67 is a unit for transmitting the signal received from the transmission section 66 to the main apparatus 12-1 by radio communication. In addition, the antenna 67 is also a unit for receiving a signal from the main apparatus 12-1 and supplying the received signal to the reception section 68. The reception section 68 is a unit for passing on a signal received from the antenna 67 to the CPU 61.

The encryption/decryption section 69 is a unit for encrypting the common secret-key 31 read out from the non-contact IC card 71, decrypting a common private-key received by the reception section 68 and encrypting the decrypted common private-key. The operation input section 70 is a unit to be operated by the user as well as a unit for supplying a signal corresponding to the operation to the CPU 61.

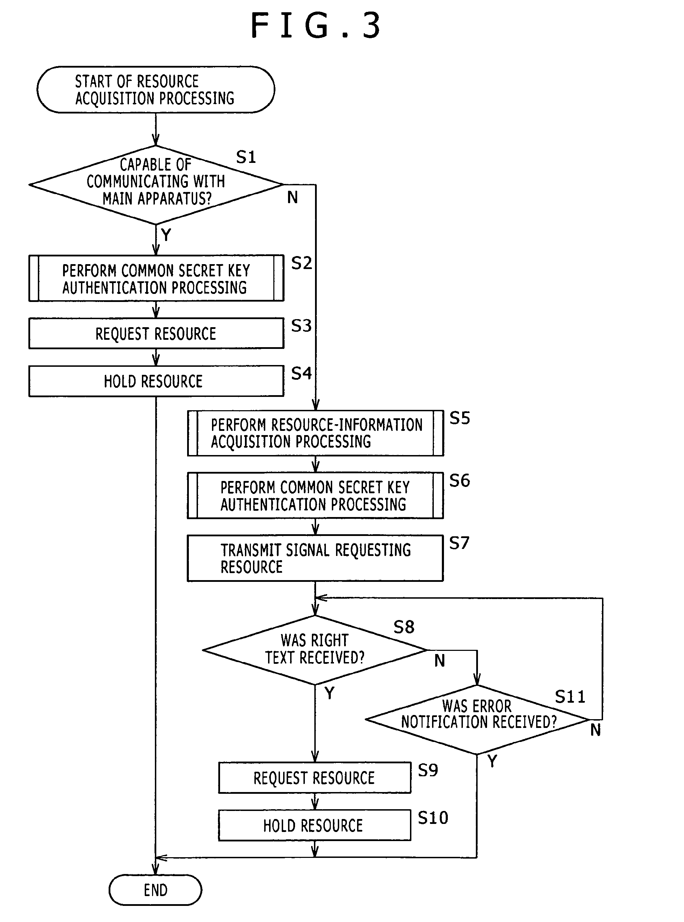

Fig. 3 shows a flowchart referred to in explanation of resource acquisition processing carried out by the mobile terminal 11 shown in Fig. 2. It is to be noted that the user has stored its personal information in a main apparatus of its own and stored the common secret-key 31 (or 32), information on resources connected to the main apparatus and the network address of the main apparatus in the non-contact IC card 71. The resource acquisition processing represented by the flowchart shown in Fig. 3 is started, for example, when the user operates the operation input section 70 to make a request for acquisition of a resource connected to the main apparatus 12-1.

In an operation carried out at a step S1, the CPU 61 produces an output of determination as to whether or not a radio communication with a base main apparatus can be carried out. A base main apparatus used as a technical term in the following description is defined as a main apparatus associated with a mobile terminal 11 and used for storing personal information of a user operating the mobile terminal 11. To put it concretely, the mobile terminal 11 typically examines apparatus, which can be communicated with by a radio communication, to produce an output of determination as to whether or not the base main apparatus is included in the examined apparatus.

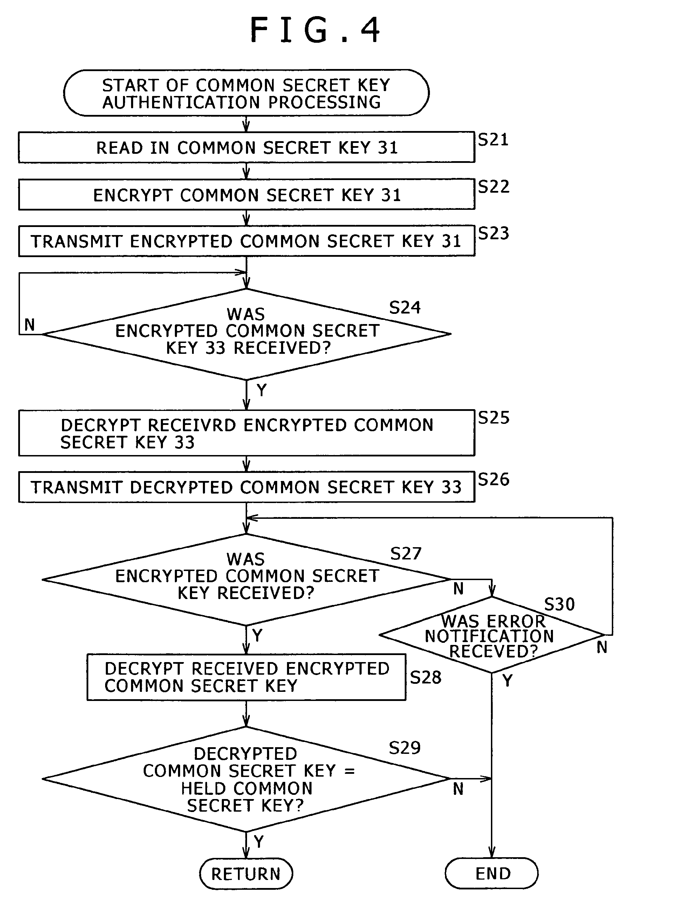

If the determination result produced in a process carried out at the step S1 indicates that a radio communication with the base main apparatus can be carried out, the flow of the processing goes on to a step S2 at which the CPU 61 carries out common private-key authentication processing in conjunction with the main apparatus, which is the main apparatus 12-1 if the mobile terminal 11 is the mobile terminal 11-1. Then, the flow of the processing goes on to a step S3. Details of the common private-key authentication processing will be explained later by referring to a flowchart shown in Fig. 4.

In a process carried out at the step S3, the CPU 61 controls the transmission section 66 to transmit a signal to the main apparatus by way of the antenna 67 as a signal making a request for a resource specified by an operation carried out by the user on the operation input section 70. Let us assume that the main apparatus is the main apparatus 12-1. The user specifies the requested resource as follows. The reader/writer 65 reads out information on resources from the non-contact IC card 71 and displays the information on the display section 64. Looking at the displayed information on resources, the user selects a desired resource and operates the operation input section 70 to specify the desired resource. A signal making a request for the specified resource is transmitted to the main apparatus 12-1 by way of the antenna 67. It is to be noted that, in the following description, the operation carried out by the CPU 61 to control the transmission section 66 so as to transmit a signal is explained by referring to the operation imply as an operation carried out by the CPU 61 to transmit a signal.

After the process carried out at the step S3 is completed, the flow of the processing goes on to a step S4 at which the antenna 67 receives a resource transmitted by the main apparatus 12-1 in response to the resource request signal transmitted in the process carried out at the step S3. The antenna 67 then passes on the received resource to the CPU 61 by way of the reception section 68. The CPU 61 stores the resource in the RAM 63. It is to be noted that, in the following description, operations carried out by the antenna 67 to receive a signal and supply the signal to the CPU 61 are explained by referring to the operations simply as operation carried out by the CPU 61 to receive a signal.

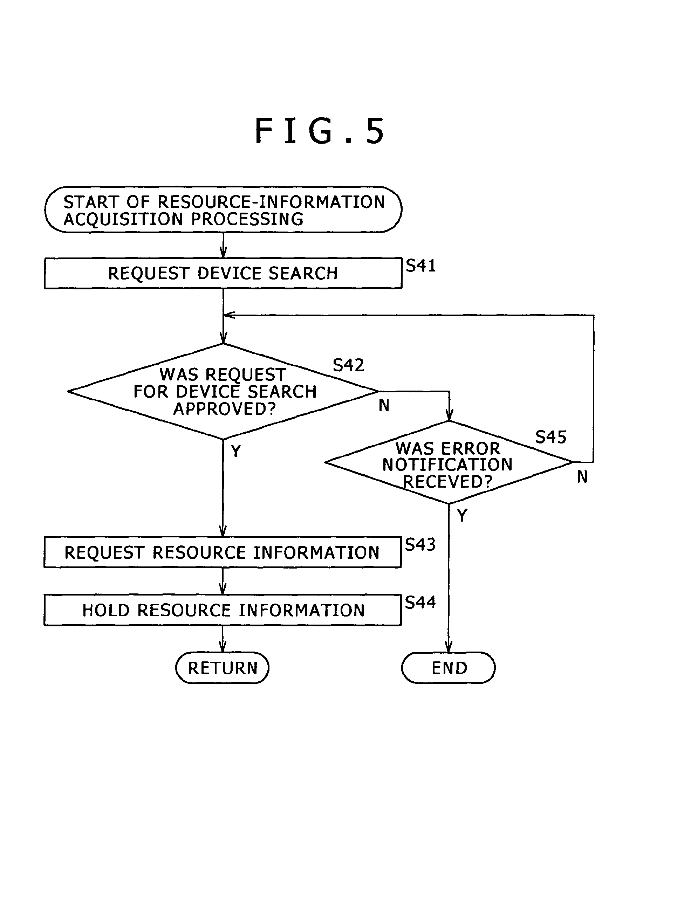

If the CPU 61 produces a determination output, which indicates that a radio communication with the main apparatus cannot be carried out (for example, the mobile terminal 11-2 is not capable of communicating with main apparatus 12-2), in the process carried out at the step S1, on the other hand, the flow of the processing goes on to a step S5 at which resource-information acquisition processing is carried out. Then, the flow of the processing goes on to a step S6. Let us for example assume that the mobile terminal 11 is the mobile terminal 11-2. In this case, the main apparatus 12-1 with which the mobile terminal 11-2 is capable of communicating is not the base main apparatus of the mobile terminal 11-2. Thus, information on resources connected to the main apparatus 12-1 is not stored in the non-contact IC card 71. In consequence, the mobile terminal 11-2 needs to acquire information on resources connected to the main apparatus 12-1. For this reason, the resource-information acquisition processing is carried out at the step S5. Details of the resource-information acquisition processing will be explained later by referring to a flowchart shown in Fig. 5.

In a process carried out at the step S6, the CPU 61 carries out common private-key authentication processing in conjunction with the main apparatus, which is the main apparatus 12-2. Then, the flow of the processing goes on to a step S7. It is to be noted that, since the mobile terminal 11-2 is not capable of directly communicating with the main apparatus 12-2 in this case, as will be described later, the mobile terminal 11-2 carries out the common private-key authentication processing at the step S6 by communicating with the main apparatus 12-2 through the main apparatus 12-1 and the Internet 21. Details of the common private-key authentication processing will be explained later by referring to a flowchart shown in Fig. 4.

In a process carried out at the step S7, the CPU 61 reads out the address of the main apparatus 12-2 from the non-contact IC card 71. Then, the mobile terminal 11-2 transmits a signal making a request for a resource specified by an operation carried out by the user on the operation input section 70 and the address of the main apparatus 12-2 to the main apparatus 12-1. The signal making a request for a resource is a resource-utilization right issuance request, which is a signal making a request for issuance of a right to utilize the resource. Subsequently, the main apparatus 12-1 passes on the signal making a request for a resource to the main apparatus 12-2 by way of the Internet 21. That is to say, the user operates the operation input section 70 to acquire resource information obtained at the step S5 as information on resources connected to the main apparatus 12-1 and display the information on the display section 64. Then, the user operates the operation input section 70 to select one of the resources as a resource to be acquired. Subsequently, the mobile terminal 11-2 transmits the resource-utilization right issuance request to the main apparatus 12-2 by way of the main apparatus 12-1 and the Internet 21 as a signal making a request for issuance of a right to utilize the resource.

As described above, the mobile terminal 11-2 notifies the main apparatus 12-1 of the address of the main apparatus 12-2. In this way, the mobile terminal 11-2 is capable of communicating with the main apparatus 12-2 serving as the base main apparatus of the mobile terminal 11-2 through the main apparatus 12-1, which the mobile terminal 11-2 is capable of communicating with by radio communication, and the Internet 21.

After the process carried out at the step S7 is completed, the flow of the processing goes on to a step S8 at which the CPU 61 produces a result of determination as to whether or not a resource utilization right has been received from the main apparatus 12-1. The resource utilization right is data of a right text describing a right to acquire a resource. If the determination result produced in the process carried out at the step S8 indicates that the right text has been received from the main apparatus 12-1, the flow of the processing goes on to a step S9 at which the mobile terminal 11-2 transmits the received right text and a resource request signal to the main apparatus 12-1. This is because the received right text gives a right to the mobile terminal 11-2 as a right to utilize a resource. After the process carried out at the step S9 is completed, the flow of the processing goes on to a step S10 at which the CPU 61 receives a resource (or information necessary for utilizing the resource) transmitted by the main apparatus 12-1 in response to the resource request signal. Then, the CPU 61 stores the resource in the RAM 63 and terminates the execution of the processing represented by this flowchart.

In this way, the mobile terminal 11-2 is capable of utilizing a resource connected to the main apparatus 12-1 which is not the base main apparatus of the mobile terminal 11-2.

If the determination result produced in the process carried out at the step S8 indicates that the right text has not been received from the main apparatus 12-1, on the other hand, the flow of the processing goes on to a step S11 at which the CPU 61 produces a result of determination as to whether or not an error notification has been received from the main apparatus 12-2 through the main apparatus 12-1. The error notification is a notice indicating that the main apparatus 12-2 cannot issue a right text describing a right to acquire a resource. If the determination result produced by the CPU 61 in the process carried out at the step S11 indicates that an error notification has not been received from the main apparatus 12-2 through the main apparatus 12-1, the flow of the processing goes back to the step S8 to repeat the processes described above.

If the determination result produced by the CPU 61 in the process carried out at the step S11 indicates that an error notification has been received from the main apparatus 12-2, on the other hand, the execution of the processing represented by this flowchart is ended. This is because the mobile terminal 11-2 does not have a right to utilize the resource connected to the main apparatus 12-1.

Fig. 4 shows a flowchart referred to in explanation of the common private-key authentication processing carried out at the steps S2 and S6 of the flowchart shown in Fig. 3. This common private-key authentication processing is carried out by a mobile terminal 11 through exchanges of information between the mobile terminal 11 and the base main apparatus of the mobile terminal 11.

In the typical common private-key authentication processing represented by the flowchart shown in Fig. 4, the mobile terminal 11 carrying out the processing is the mobile terminal 11-1. If the mobile terminal 11 carrying out the common private-key authentication processing is the mobile terminal 11-2, however, the mobile terminal 11-2 is not capable of communicating with the main apparatus 12-2, which is the base main apparatus of the mobile terminal 11-2. Thus, in this case, the mobile terminal 11-2 notifies the main apparatus 12-1 of the address of the main apparatus 12-2 so that the mobile terminal 11-2 is capable of communicating with the main apparatus 12-2 through the main apparatus 12-1 and the Internet 21.

In a process carried out at a step S21, the CPU 61 controls the reader/writer 65 to read out the common secret-key 31 serving as the authentication information of the user from the non-contact IC card 71 and store the common secret-key 31 in the RAM 63. After the process carried out at the step S21 is completed, the flow of the processing goes on to a step S22 at which the CPU 61 encrypts the common secret-key 31 before the flow of the processing goes on to a step S23. That is to say, the mobile terminal 11-1 acquires the public-key 39 corresponding to the secret-key 35 of the main apparatus 12-1 serving as the base main apparatus of the mobile terminal 11-1 from the authentication apparatus 13 and stores the public-key 39 in the RAM 63. Then, the CPU 61 reads out the public-key 39 from the RAM 63, supplying the common secret-key 31 and the public-key 39 to the encryption/decryption section 69. The encryption/decryption section 69 encrypts the common secret-key 31 by using the public-key 39.

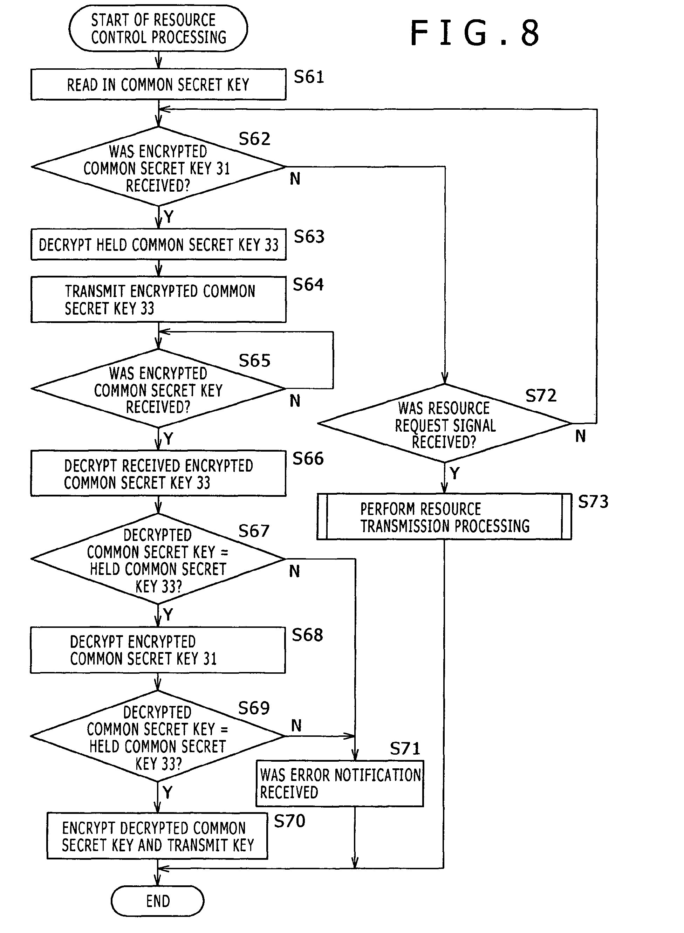

In a process carried out at the step S23, the mobile terminal 11-1 transmits the common secret-key 31 encrypted in the process carried out at the step S22 to the main apparatus 12-1 serving as the base main apparatus of the mobile terminal 11-1. Then, the flow of the processing goes on to a step S24. In a process carried out at the step S24, the CPU 61 produces a result of determination as to whether or not an encrypted common secret-key 33 has been received from the main apparatus 12-1 serving as the base main apparatus of the mobile terminal 11-1. The common secret-key 33 encrypted by using the secret-key 35 is transmitted by the main apparatus 12-1 at a step S64 of a flowchart to be described later by referring to Fig. 8. If the result of the determination indicates that the encrypted common secret-key 33 has not been received, the flow of the processing goes back to the step S24 to carry out the process repeatedly in a state of waiting for the encrypted common secret-key 33 to be received from the main apparatus 12-1.

As the determination result produced in the process carried out at the step S24 indicates that the encrypted common secret-key 33 has been received from the main apparatus 12-1, the flow of the processing goes on to a step S25 at which the CPU 61 controls the encryption/decryption section 69 to decrypt the common secret-key 33 by using the public-key 39 stored in the RAM 63 in the process carried out at the step S22 as a public-key forming a pair in conjunction with the secret-key 35. As described above, the private-key 35 is associated with the public-key 39, which forms a pair in conjunction with the secret-key 35, in such a relation that a text encrypted on the basis of one of the keys can be decrypted on the basis of the other key. The encrypted text is referred to as a pass phrase. In this case, since the common secret-key 33 is a pass phrase encrypted on the basis of the secret-key 35, the encrypted common secret-key 33 can be decrypted on the basis of the public-key 39 transmitted from the main apparatus 12-1 to the mobile terminal 11-1 to result in the common secret-key 33 provided that the public-key 39 is not interpolated on a communication line between the main apparatus 12-1 and the mobile terminal 11-1.

After the process carried out at the step S25 is completed, the flow of the processing goes on to a step S26 at which the CPU 61 controls the encryption/decryption section 69 to encrypt the decrypted common secret-key 33 by using the public-key 39 stored in the RAM 63 in the process carried out at the step S22 and transmits the encrypted common private-key to the main apparatus 12-1 serving as the base main apparatus of the mobile terminal 11-1. Then, the flow of the processing goes on to a step S27. In a process carried out at the step S27, the CPU 61 produces a result of determination as to whether or not an encrypted common secret-key 31 has been received from the main apparatus 12-1 serving as the base main apparatus of the mobile terminal 11-1. The common secret-key 31 has been encrypted by using the secret-key 35 in a process carried out at a step S68 of a flowchart to be described later by referring to Fig. 8. To put it in detail, the main apparatus 12-1 decrypts the encrypted common secret-key 31, which has been transmitted to the main apparatus 12-1 in the process carried out at the step S23, by using the secret-key 35 and encrypts back the decrypted common secret-key 31 in the process carried out at the step S68 by using the secret-key 35.

If the determination result produced by the CPU 61 in the process carried out at the step S27 indicates that an encrypted common secret-key 31 has been received from the main apparatus 12-1, the flow of the processing goes on to a step S28 at which the CPU 61 controls the encryption/decryption section 69 to decrypt the encrypted common secret-key 31 by using the public-key 39 stored in the RAM 63 as a public-key forming a pair in conjunction with the secret-key 35. After the process carried out at the step S28 is completed, the flow of the processing goes on to a step S29 to produce a result of determination as to whether or not the common private-key decrypted in the process carried out at the step S28 is identical with the common secret-key 31 stored in the RAM 63 in the process carried out at the step S21.

If the determination result produced by the CPU 61 in the process carried out at the step S29 indicates that the decrypted common private-key 31 is identical with the common secret-key 31 stored in the RAM 63, the flow of the processing returns to the step S3 or S7 of the flowchart shown in Fig. 3. That is to say, in this case, the common secret-key 31 encrypted by using the public-key 39 in the process carried out at the step S23 has been normally decrypted by using the secret-key 35 in the main apparatus 12-1 to give the common secret-key 31. That is to say, the common secret-key 31 has been encrypted in the main apparatus 12-1 by using the secret-key 35 and the encrypted common secret-key 31 has been normally decrypted in the mobile terminal 11-1 by using the public-key 39 to result in the common secret-key 31.

Thus, the secret-key 35 and the public-key 39 forming a pair in conjunction with the secret-key 35 are associated with each other in such a relation that the common secret-key 31 encrypted on the basis of one of the keys can be decrypted on the basis of the other key. This relation proves that there has been no interpolation on a communication line between the mobile terminal 11-1 and the main apparatus 12-1.

If the determination result produced by the CPU 61 in the process carried out at the step S29 indicates that the common private-key decrypted in the process carried out at the step S28 is not identical with the common secret-key 31 stored in the RAM 63, on the other hand, the secret-key 35 and the public-key 39 forming a pair in conjunction with the secret-key 35 are determined to be in such a relation that the common secret-key 31 encrypted on the basis of one of the keys cannot be decrypted on the basis of the other key. In this case, the relation suggests that there has been interpolation on a communication line between the mobile terminal 11-1 and the main apparatus 12-1 or that the main apparatus 12-1 is not a valid main apparatus. In this case, the execution of the processing represented by this flowchart is ended.

As described above, the flow of the processing returns to the step S3 or S7 of the flowchart shown in Fig. 3 only if the mobile terminal 11-1 recognizes no interpolation on a communication line between the mobile terminal 11-1 and the main apparatus 12-1. In the process carried out at the step S3 or S7 of the flowchart shown in Fig. 3, a signal making a request for a resource is transmitted to the main apparatus 12-1 so that data can be exchanged between the mobile terminal 11-1 and the main apparatus 12-1 in strict confidence.

If the determination result produced by the CPU 61 in the process carried out at the step S27 indicates that an encrypted common secret-key 31 has not been received from the main apparatus 12-1, on the other hand, the flow of the processing goes on to a step S30 at which the CPU 61 produces a result of determination as to whether or not an error notification has been received from the main apparatus 12-1 as a notice transmitted by the main apparatus 12-1 in a process carried out at a step S71 of a flowchart, which will be described later by referring to Fig. 8, to inform the mobile terminal 11-1 that the relation between the main apparatus 12-1 and the mobile terminal 11-1 is not a normal relation. If the determination result produced by the CPU 61 in the process carried out at the step S30 indicates that an error notification has not been received from the main apparatus 12-1, the flow of the processing goes back to the step S27 at which the process described above is repeated.

If the determination result produced by the CPU 61 in the process carried out at the step S30 indicates that an error notification has been received from the main apparatus 12-1, on the other hand, the execution of the processing represented by this flowchart is ended. This is because the error notification indicates that the relation between the main apparatus 12-1 and the mobile terminal 11-1 is not a normal relation.

Fig. 5 shows a flowchart referred to in explanation of the resource-information acquisition processing carried out at the step S5 of the flowchart shown in Fig. 3.

In a process carried out at a step S41, for example, the CPU 61 employed in the mobile terminal 11-2 requests the main apparatus 12-1, which is not the base main apparatus capable of communicating with the mobile terminal 11-2 directly, to search for devices.

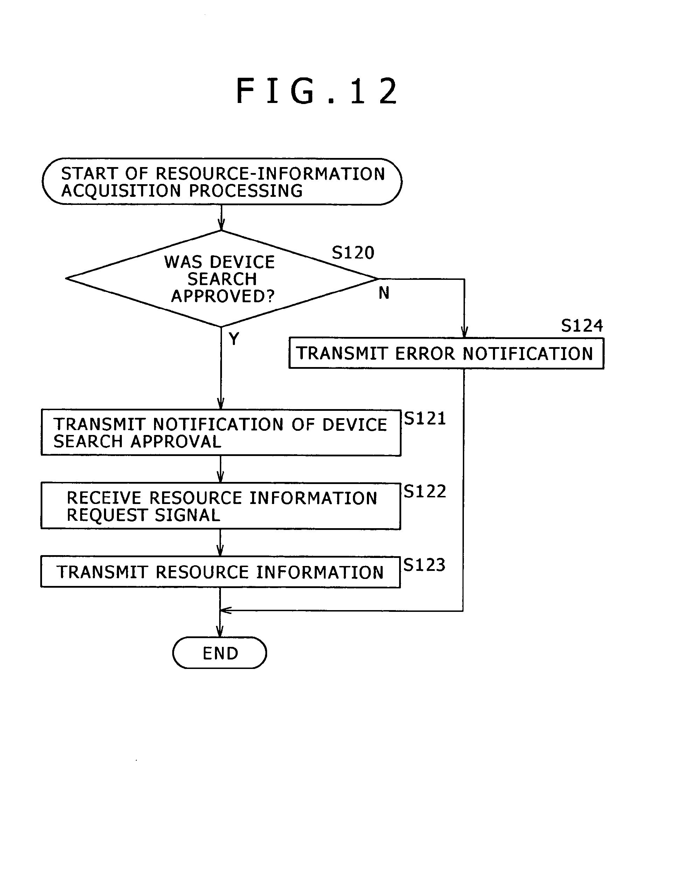

After the process carried out at the step S41 is completed, the flow of the processing goes on to a step S42 at which the CPU 61 produces a result of determination as to whether or not the search for devices has been approved by the main apparatus 12-1. Such an approval of the search for devices is transmitted to the mobile terminal 11-2 by the main apparatus 12-1 in a process carried out at a step S121 of a flowchart to be described later by referring to Fig. 12. If the determination result produced by the CPU 61 in the process carried out at the step S42 indicates that the search for devices has been approved by the main apparatus 12-1, the flow of the processing goes on to a step S43 at which the main apparatus 12-1 is requested to transmit information on resources to the mobile terminal 11-2.

After the process carried out at the step S43 is completed, the flow of the processing goes on to a step S44 at which the CPU 61 receives the information on resources from the main apparatus 12-1 transmitting the information in response to the request for the information on resources, and stores the information in the RAM 63.

If the determination result produced by the CPU 61 in the process carried out at the step S42 indicates that the search for devices has not been approved by the main apparatus 12-1, on the other hand, the flow of the processing goes on to a step S45 at which the CPU 61 produces a result of determination as to whether or not an error notification has been received from the main apparatus 12-1 as a notice transmitted by the main apparatus 12-1 in response to the request for the search for devices to reveal disapproval of the request. If the determination result produced by the CPU 61 in the process carried out at the step S45 indicates that an error notification has not been received from the main apparatus 12-1, the flow of the processing goes back to the step S42 at which the process of this step is repeated.

If the determination result produced by the CPU 61 in the process carried out at the step S45 indicates that an error notification has been received from the main apparatus 12-1, on the other hand, the execution of the processing represented by this flowchart is ended. This is because the information on resources cannot be obtained from the main apparatus 12-1 due to the fact that the main apparatus 12-1 has disapproved the request for the search for devices.

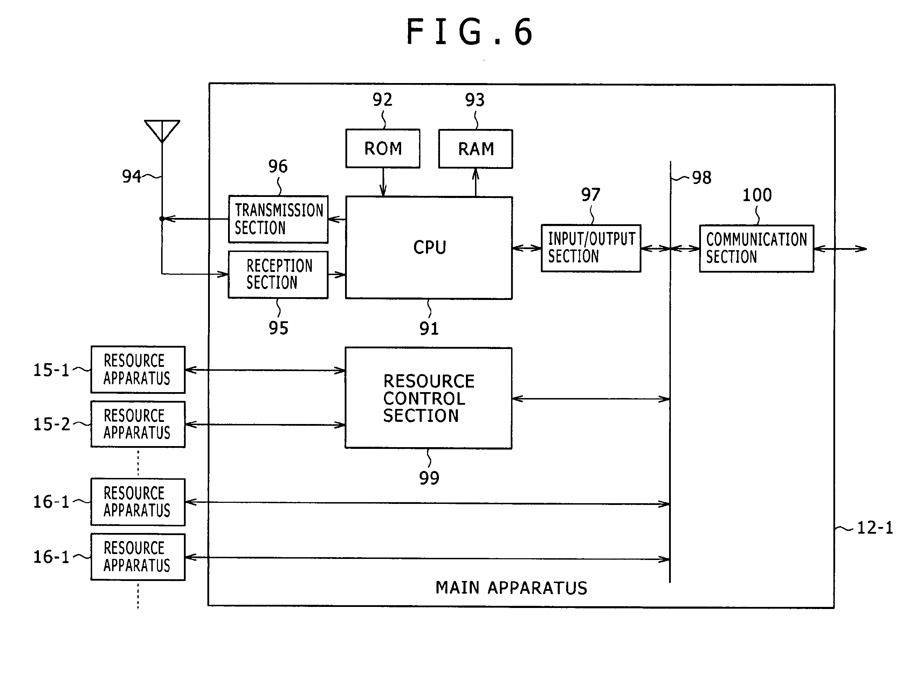

Fig. 6 is a block diagram showing a typical detailed configuration of the main apparatus 12 employed in the communication system shown in Fig. 1.

Fig. 6 shows a typical configuration of the main apparatus 12-1 but the configuration of the main apparatus 12-2 is identical with that of the main apparatus 12-1.

As shown in the figure, the main apparatus 12-1 comprises a CPU 91, a ROM 92, a RAM 93, an antenna 94, a reception section 95, a transmission section 96, an input/output section 97, a data bus 98, a resource control section 99 and a communication section 100.

The CPU 91 is a section for carrying out various kinds of processing by execution of programs stored in the ROM 92. For example, the CPU 91 identifies the supplier of data received by the reception section 95 and controls the input/output section 97 to supply data to the identified supplier. The RAM 93 is a memory used or properly storing data required in execution of the various kinds of processing by the CPU 91.

The antenna 94 is a component for receiving a signal from a mobile terminal 11 and supplying the signal to the reception section 95. The antenna 94 is also a component for transmitting a signal received from the transmission section 96 and to a mobile terminal 11.

The reception section 95 is a unit for supplying a signal received from the antenna 94 to the CPU 91. The transmission section 96 is a unit for supplying a signal to be transmitted to a mobile terminal 11 from the CPU 91 to the antenna 94 in accordance with a command issued by the CPU 91.

The input/output section 97 is connected to the resource control section 99 and the communication section 100 as well as resource apparatus 16-1 and 16-2 through the data bus 98. On the other hand, the resource control section 99 is connected to resource apparatus 15-1 and 15-2.

The communication section 100 is a unit for transmitting signals to the main apparatus 12-2, the authentication apparatus 13 and the value issuance apparatus 14 by way of the Internet 21 as well as receiving signals, which are transmitted by the main apparatus 12-2, the authentication apparatus 13 and the value issuance apparatus 14 to the main apparatus 12-1 by way of the Internet 21, in accordance with a command received from the CPU 91.

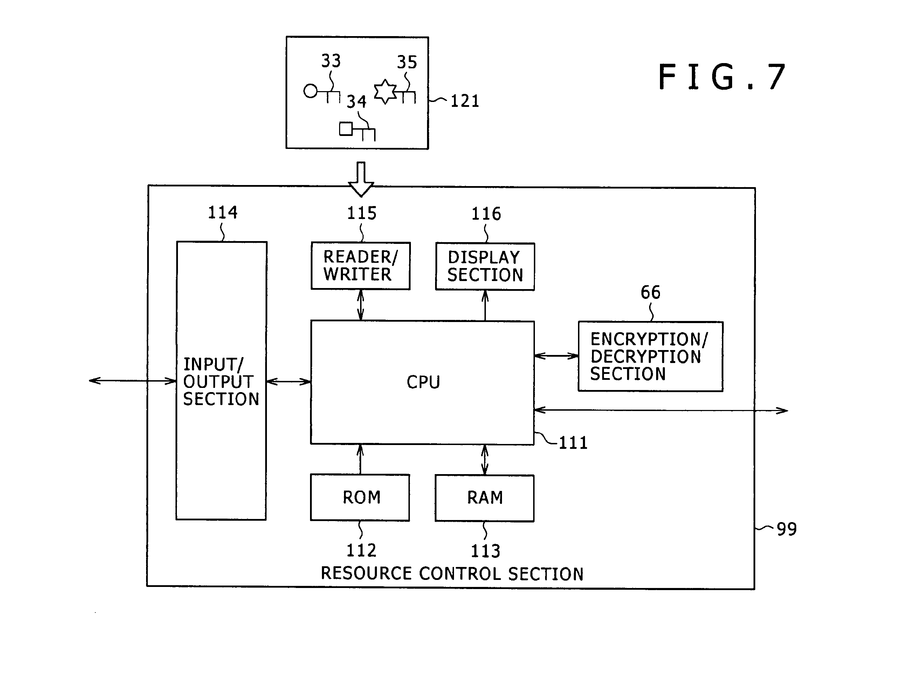

Fig. 7 is a block diagram showing a typical detailed configuration of the resource control section 99 employed in the main apparatus 12-1 shown in Fig. 6.

As shown in the figure, the resource control section 99 includes a CPU 111, a ROM 112, a RAM 113, an input/output section 114, a reader/writer 115, a display section 116 and an encryption/decryption section 117.

The CPU 111 is a section for carrying out various kinds of processing by execution of programs stored in the ROM 112. The RAM 113 is a memory used or storing personal information of the user as information managed by the CPU 111. The RAM 113 is also used for properly storing data required in execution of the various kinds of processing by the CPU 111.

The CPU 111 is connected to the resource apparatus 15-1 and 15-2 through the input/output section 114. Resources supplied by the resource apparatus 15-1 and 15-2 are fed to the CPU 91 by way of the data bus 98 and input/output section. The reader/writer 115 is a unit for reading out data from and writing data into a non-contact IC card 121 inserted into the main apparatus 12-1.

The non-contact IC card 121 includes a storage area used for storing information to be used for authentication of a user and a storage area used for storing information to be used for authentication of an electronic value. The information to be used for authentication of a user includes the common private-key 33 identical with the common private-key 31 of the mobile terminal 11-1 and the private-key 35 for proving the validity of the main apparatus 12-1 itself. On the other hand, the information to be used for authentication of an electronic value includes the common private-key 34 issued to the value issuance apparatus 14. It is to be noted that the storage area used for storing information to be used for authentication of an electronic value can be divided into a storage area for authentication and a storage area used for storing electronic values. A storage area for an authentication includes the private-key 34, and a storage area for an electronic value includes an electronic value (for example, a right text).

As described above, by safely storing the common private-key 33, the common private-key 34 and the private-key 35 in the non-contact IC card 121, the safety and the convenience of the communication system can be improved.

The display section 116 is a unit for displaying, for example, information on resources in accordance with a command issued by the CPU 111. The encryption/decryption section 117 is a unit for encrypting and decrypting information such a key.

It is to be noted that the main apparatus 12-1 does not need to be enclosed physically in one box. Instead, the main apparatus 12-1 can be implemented as a plurality of separated apparatus, which are connected to each other by a data bus and collaborate to carry out the functions of the main apparatus 12-1.

Fig. 8 shows a flowchart referred to in explanation of resource control processing carried out by the resource control section 99 shown in Fig. 7 as a section employed in the main apparatus 12. This resource control processing is started, for example, when the main apparatus 12 receives a signal from a mobile terminal 11.

The following description explains the resource control processing as processing carried out by the main apparatus 12-1. However, the resource control processing carried out by the main apparatus 12-2 is the same as that carried out by the main apparatus 12-1.

In a process carried out at a step S61, the CPU 111 controls the reader/writer 115 to read out the common private-key 33 from the non-contact IC card 121 and stores the common private-key 33 in the RAM 113. After the process carried out at the step S61 is completed, the flow of the processing goes on to a step S62 at which the CPU 111 produces a result of determination as to whether or not an encrypted common private-key 31 transmitted by the mobile terminal 11-1 in the process carried out at the step S23 of a flowchart shown in Fig. 4 has been received.

That is to say, if a signal received by the antenna 94 and supplied to the CPU 91 by way of the reception section 95 is a signal destined for the main apparatus 12-1, the CPU 91 controls the input/output section 97 to supply the signal to the CPU 111 employed in resource control section 99 through the data bus 98. Then, the CPU 111 produces a result of determination as to whether or not the received signal is the common private-key 31. In the following description, the operation carried out by the CPU 91 to supply a signal received by the antenna 94 to the CPU 111 employed in resource control section 99 is explained by referring to the operation simply as an operation carried out by the CPU 111 to receive the signal.

If the determination result produced by the CPU 111 in the process carried out at the step S62 indicates that an encrypted common private-key 31 transmitted by the mobile terminal 11-1 has been received, the flow of the processing goes on to a step S63 at which the mobile terminal 11-1 reads out the private-key 35 from the non-contact IC card 121 and stores the encrypted common private-key 31 and the private-key 35 in the RAM 113. Then, the CPU 111 controls the encryption/decryption section 117 to encrypt the common private-key 33 stored in the RAM 113 in the process carried out at the step S61 by using the private-key 35.

After the process carried out at the step S63 is completed, the flow of the processing goes on to a step S64 at which the CPU 111 transmits the common private-key 33 encrypted in the process carried out at the step S62 to the mobile terminal 11-1. Then, the flow of the processing goes on to a step S65. In a process carried out at the step S65, the CPU 111 produces a result of determination as to whether or not an encrypted common resource key transmitted by the mobile terminal 11-1 in the process carried out at the step S26 of a flowchart shown in Fig. 4 has been received. If the result of the determination indicates that the encrypted common resource key has not been received, the flow of the processing goes back to the step S65 to carry out the process repeatedly in a state of waiting for the encrypted common resource key to be received from the mobile terminal 11-1.

As the determination result produced by the CPU 111 in the process carried out at the step S65 indicates that the encrypted common resource key has been received from the mobile terminal 11-1, the flow of the processing goes on to a step S66. In a process carried out at the step S66, the CPU 111 decrypts the encrypted common resource key. To put it in detail, the CPU 111 controls the encryption/decryption section 117 to decrypt the encrypted common resource key by using the private-key 35 stored in the RAM 113 in the process carried out at the step S63 as a key forming a pair in conjunction with the public-key 39. Then, the flow of the processing goes on to a step S67.

In a process carried out at the step S67, the CPU 111 produces a result of determination as to whether or not the decrypted common resource key is equal to the common private-key 33 stored in the RAM 113. If the determination result produced by the CPU 111 in the process carried out at the step S67 indicates that the decrypted common resource key is equal to the common private-key 33 stored in the RAM 113, the flow of the processing goes on to a step S68.

That is to say, in this case, the common private-key 33 encrypted by using the private-key 35 in the process carried out at the step S63 is normally decrypted by using the public-key 39 in the mobile terminal 11-1 to result in the common private-key 33. Then, the common private-key 33 is encrypted in the mobile terminal 11-1 by using the public-key 39 and the encrypted common private-key 31 is normally decrypted by using the private-key 35 in the main apparatus 12-1 to obtain the common private-key 33.

Thus, since the relation between the private-key 35 and the public-key 39 forming a pair in conjunction with the private-key 35 is such a relation that the common private-key 33 encrypted on the basis of one of the keys can be decrypted on the basis of the other key, the main apparatus 12-1 recognizes no interpolation carried out on the communication line between the mobile terminal 11-1 and the main apparatus 12-1.

Then, at the step S68, the CPU 111 decrypts the encrypted common private-key 31, which has been received from the mobile terminal 11-1 as indicated by the determination result produced in the process carried out at the step S62 and has been stored in the RAM 113, by using the private-key 35 forming a pair in conjunction with the public-key 39 stored in the RAM 113.

After the process carried out at the step S68 is completed, the flow of the processing goes on to a step S69 at which the CPU 111 produces a result of determination as to whether or not the common resource key decrypted in the process carried out at the step S68 is equal to the common private-key 33 stored in the RAM 113. If the determination result produced by the CPU 111 in the process carried out at the step S69 indicates that the decrypted common resource key is equal to the common private-key 33 stored in the RAM 113, the flow of the processing goes on to a step S70.

That is to say, in this case, the common private-key 31, which is identical with the common private-key 33 and has been encrypted by the mobile terminal 11-1 by using the public-key 39 in the process carried out at the step S22 of the flowchart shown in Fig. 4, is decrypted normally by the main apparatus 12-1 by using the private-key 35 in the process carried out at the step S68 to result in the common private-key 31. Then, the fact that the common private-key 31 owned by the mobile terminal 11-1 is the same as the common private-key 33 owned by the main apparatus 12-1 is verified, that is, the user operating the mobile terminal 11-1 is authenticated as the user of the main apparatus 12-1.

Thus, since the relation between the private-key 35 and the public-key 39 forming a pair in conjunction with the private-key 35 is such a relation that the common private-key 31 encrypted on the basis of one of the keys can be decrypted on the basis of the other key, the main apparatus 12-1 recognizes no interpolation carried out on the communication line between the mobile terminal 11-1 and the main apparatus 12-1. In addition, since the common private-key 31 owned by the mobile terminal 11-1 is the same as the common private-key 33 owned by the main apparatus 12-1, the main apparatus 12-1 authenticates the user operating the mobile terminal 11-1 as a user storing personal information in the main apparatus 12-1.

Later on, at the step S70, the CPU 111 controls the encryption/decryption section 69 to encrypt the decrypted common private-key by using the private-key 35 stored in the RAM 113 and transmits the encrypted key to the mobile terminal 11-1.

If the determination result produced by the CPU 111 in the process carried out at the step S67 indicates that the common resource key decrypted in the process carried out at the step S66 is not equal to the common private-key 33 stored in the RAM 113 or if the determination result produced by the CPU 111 in the process carried out at the step S69 indicates that the common resource key decrypted in the process carried out at the step S68 is not equal to the common private-key 33 stored in the RAM 113, on the other hand, the flow of the processing goes on to a step S71 to transmit an error notification revealing an abnormal relation between the mobile terminal 11-1 and the main apparatus 12-1 to the mobile terminal 11-1. This is because an interpolation has been carried out in the communication line between the mobile terminal 11-1 and the main apparatus 12-1 or the main apparatus 12-1 is not the base main apparatus of the mobile terminal 11-1. Finally, execution of the processing represented by this flowchart is ended.

As described above, the decrypted common private-key 31 is encrypted and transmitted to the mobile terminal 11-1 only if it is possible to verify that no interpolation has been carried out on the communication line between the mobile terminal 11-1 and the main apparatus 12-1 and the main apparatus 12-1 is the base main apparatus of the mobile terminal 11-1.

Later on, the mobile terminal 11-1 transmits a signal making a request for a resource to the main apparatus 12-1 only if it was possible to verify that no interpolation has been carried out on the communication line between the mobile terminal 11-1 and the main apparatus 12-1. Thus, the mobile terminal 11-1 is capable of requesting and utilizing a resource only if it is possible to verify that no interpolation has been carried out on the communication line between the mobile terminal 11-1 and the main apparatus 12-1 and the main apparatus 12-1 is the base main apparatus of the mobile terminal 11-1.

As a result, data can be exchanged between the mobile terminal 11-1 and the main apparatus 12-1 in strict confidence.

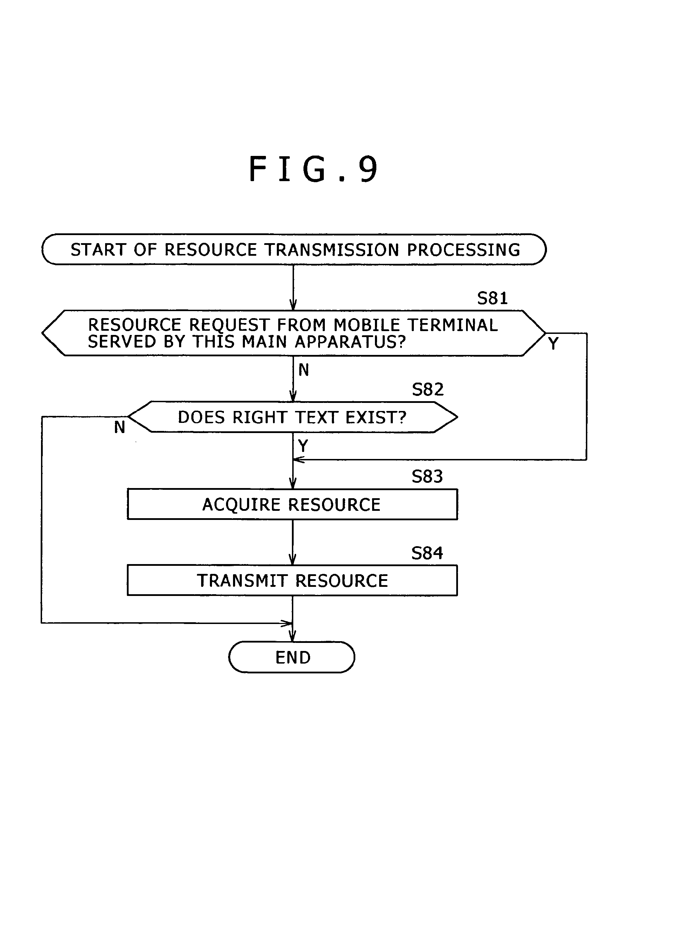

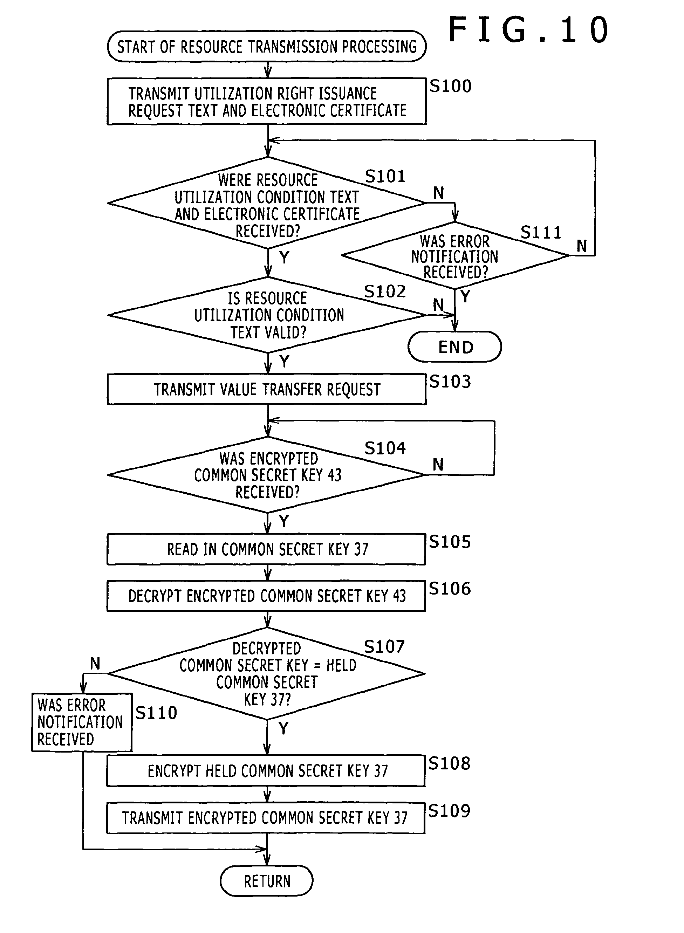

If the determination result produced by the CPU 111 in the process carried out at the step S62 indicates that a signal making a request for a resource has been received from the mobile terminal 11-1, the flow of the processing goes on to a step S73 at which resource transmission processing is carried out. Finally, execution of the processing represented by this flowchart is ended. Details of the resource transmission processing will be explained later by referring to flowcharts shown in Figs. 9 and 10.

If the determination result produced by the CPU 111 in the process carried out at the step S72 indicates that a signal making a request for a resource has not been received from the mobile terminal 11-1, on the other hand, the flow of the processing goes back to the step S62 at which the process of this step is repeated.

Fig. 9 shows a flowchart referred to in explanation of the resource transmission processing carried out by the main apparatus 12-1, which is capable of carrying direct radio communications with the mobile terminal 11-1 and 11-2, at the step S73 of the flowchart shown in Fig. 8.

In an operation carried out at a step S81, the CPU 111 employed in the main apparatus 12-1 produces a result of determination as to whether or not a resource request signal received in the process carried out at the step S72 of the flowchart shown in Fig. 8 as a signal making a request for a resource is a resource request signal transmitted by a communication terminal associated with the main apparatus 12-1, that is, a resource request signal transmitted by the mobile terminal 11-1. If the determination result produced by the CPU 111 employed in the main apparatus 12-1 in the process carried out at the step S81 indicates that the received resource request signal is a resource request signal transmitted by the communication terminal 11-1 associated with the main apparatus 12-1, the flow of the processing goes on to a step S83, skipping a step S82.

In a process carried out at the step S83, the CPU 111 employed in the main apparatus 12-1 controls the input/output section 114 to acquire the resource from a resource apparatus 15, which has the resource requested by the mobile terminal 11-1, in accordance with the resource request signal transmitted by the communication terminal 11-1. Then, the flow of the processing goes on to a step S84. In a process carried out at the step S84, the CPU 111 employed in the main apparatus 12-1 transmits the acquired resource to the mobile terminal 11-1. Finally, control of the execution is returned to the flowchart shown in Fig. 8.

That is to say, when the main apparatus 12-1 receives a request for a resource owned by a resource apparatus 15 connected to the main apparatus 12-1 from the mobile terminal 11-1 operated by the user, personal information of whom has been stored in the main apparatus 12-1, the main apparatus 12-1 approves the utilization of the requested resource unconditionally.

If the determination result produced by the CPU 111 employed in the main apparatus 12-1 in the process carried out at the step S81 indicates that the resource request signal received in the process carried out at the step S72 of the flowchart shown in Fig. 8 is not a resource request signal transmitted by a communication terminal associated with the main apparatus 12-1, that is, a resource request signal transmitted by the mobile terminal 11-2, on the other hand, the flow of the processing goes on to a step S82 at which the CPU 111 employed in the main apparatus 12-1 produces a result of determination as to whether or not a right text is indicated, that is, whether or not a right text has been received along with the resource request signal. If the determination result produced by the CPU 111 employed in the main apparatus 12-1 in the process carried out at the step S82 indicates that no right text is indicated, control of the execution is ended without acquiring and transmitting a resource to the mobile terminal 11-2. This is because the mobile terminal 11-2 does not have a right to utilize the requested resource.

If the determination result produced by the CPU 111 employed in the main apparatus 12-1 in the process carried out at the step S82 indicates that a right text is indicated, on the other hand, the flow of the processing goes on to the step S83. In a process carried out at the step S83, the CPU 111 employed in the main apparatus 12-1 controls the input/output section 114 to acquire the resource from a resource apparatus 15, which has the resource requested by the mobile terminal 11-2, in accordance with the resource request signal transmitted by the communication terminal 11-2. Then, the flow of the processing goes on to the step S84. In a process carried out at the step S84, the CPU 111 employed in the main apparatus 12-1 transmits the acquired resource to the mobile terminal 11-2.

That is to say, when the main apparatus 12-1 receives a request for a resource owned by a resource apparatus 15 connected to the main apparatus 12-1 from the mobile terminal 11-2 operated by the user, personal information of whom is not stored in the main apparatus 12-1, the main apparatus 12-1 approves the utilization of the requested resource only if the mobile terminal 11-2 has acquired the text of a right to utilize the resource. In other words, the main apparatus 12-1 approves the utilization of the requested resource connected to the main apparatus 12-1 only if the user of the mobile terminal 11-2 presents the text of an acquired right to utilize the resource to the main apparatus 12-1.

It is to be noted that, when information is exchanged between the main apparatus 12-2 and the mobile terminal 11-2 through the main apparatus 12-1 in order to authenticate the user of the mobile terminal 11-2, the mobile terminal 11-2 acquires personal information of the user from the main apparatus 12-2 serving as the base main apparatus of the mobile terminal 11-2. The personal information includes a history of operations carried out by the user to utilize each resource. That is to say, the main apparatus 12-2 serving as the base main apparatus of the mobile terminal 11-2 has a personal-information management function, which is executed to catalog personal information such as a history of operations carried out by the user to utilize a resource owned by the main apparatus 12-2 itself for example when the user utilizes the resource. When the user of the mobile terminal 11-2 makes an attempt to utilize a resource connected to the main apparatus 12-1, the user of the mobile terminal 11-2 submits operability (or a user I/F) adjusted to favorites of the user to the main apparatus 12-1 in accordance with the personal information of the user.

Fig. 10 shows a flowchart referred to in explanation of the resource transmission processing carried out at a step S71 of the flowchart shown in Fig. 8 by the main apparatus 12-2, which is not capable of carrying out direct radio communications with the mobile terminal 11-2 even though the main apparatus 12-2 is the base main apparatus of the mobile terminal 11-2. It is to be noted that the main apparatus 12-2 has already received an electronic certificate issued by the authentication apparatus 13 from the authentication apparatus 13 and stored the certificate, which will be described later by referring to Fig. 11 in the RAM 113.

In an operation carried out at a step S100, the CPU 111 employed in main apparatus 12-2 creates a utilization-right issuance request text and an electronic certificate stored in the RAM 113 and transmits the utilization-right issuance request text and the electronic certificate to the main apparatus 12-1, which is not the base main apparatus of the mobile terminal 11-1 making an attempt to utilize a resource connected to the main apparatus 12-1. That is to say, on the basis of a resource request signal transmitted by the mobile terminal 11-2, which is not capable of carrying out a direct radio communication with the main apparatus 12-2, by way of the main apparatus 12-1, the CPU 111 employed in main apparatus 12-2 creates the utilization-right issuance request text describing identifiers of information on resources and methods of utilizing the resources.

In addition, the CPU 111 employed in main apparatus 12-2 controls the reader/writer 115 to read out the private-key 38 from the non-contact IC card 121 and stores the private-key 38 in the RAM 113. The CPU 111 then controls the encryption/decryption section 117 to encrypt a digital signature by using the private-key 38 stored in the RAM 113 and adds the digital signature to the utilization-right issuance request text. Then, the CPU 111 transmits the utilization-right issuance request text and the electronic certificate to the main apparatus 12-1 having a resource to be used by the mobile terminal 11-2 in an attempt made by the mobile terminal 11-2.

It is to be noted that the utilization-right issuance request text created by the main apparatus 12-2 and transmitted to the main apparatus 12-1 is a message issued to the main apparatus 12-1 to request the main apparatus 12-1 that a right to utilize a resource connected to the main apparatus 12-1, which is not the base main apparatus of the mobile terminal 11-2.

In addition, the resource request signal transmitted by the mobile terminal 11-2 by way of the main apparatus 12-1 to the main apparatus 12-2 serving as the base main of the mobile terminal 11-2 includes access information used for making an access to the main apparatus 12-2. Then, on the basis of the access information, the main apparatus 12-2 transmits the utilization-right issuance request text to the main apparatus 12-1.

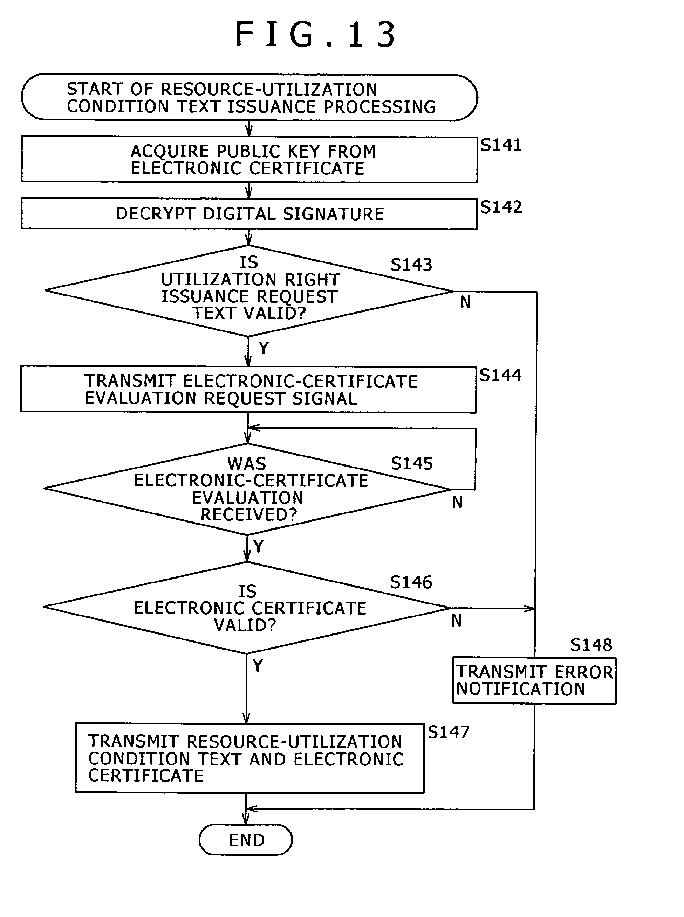

After the process carried out at the step S100 is completed, the flow of the processing goes on to a step S101 at which the CPU 111 employed in the main apparatus 12-2 produces a result of determination as to whether or not a resource-utilization condition text and the electronic certificate have been received from the main apparatus 12-1. The resource-utilization condition text transmitted by the main apparatus 12-1 receiving the utilization-right issuance request text to the main apparatus 12-2 in a process carried out at a step S147 of a flowchart to be described later by referring to Fig. 13 is a text describing a price (or a value) to approve utilization of a resource connected to the main apparatus 12-1 by the mobile terminal 11-2 and information on a transmission-destination account to which a payment of the price is to be made. If the determination result produced by the CPU 111 of the main apparatus 12-2 in the process carried out at the step S101 indicates that the resource-utilization condition text and the electronic certificate have been received from the main apparatus 12-1, the CPU 111 controls the encryption/decryption section 117 to decrypt a digital signature included in the resource-utilization condition text by using the public-key 39 forming a pair in conjunction with the private-key 35 included in the electronic certificate as the private-key 35 of the main apparatus 12-1. After the process carried out at the step S101 is completed, the flow of the processing goes on to a step S102.

In a process carried out at the step S102, the CPU 111 employed in the main apparatus 12-2 produces a result of determination as to whether or not the resource-utilization condition text is valid. That is to say, the CPU 111 produces a result of determination as to whether or not the digital signature included in the resource-utilization condition text has been decrypted normally. If the determination result produced by the CPU 111 in the process carried out at the step S102 indicates that the resource-utilization condition text is not valid, that is, if the digital signature encrypted by the private-key 35 of the main apparatus 12-1 could not be decrypted by using the public-key 39 forming a pair in conjunction with the private-key 35, execution of the processing represented by this flowchart is ended. This is because the result of the determination indicates that an interpolation has been carried out on a communication between the main apparatus 12-1 and the main apparatus 12-2.

If the determination result produced by the CPU 111 of the main apparatus 12-2 in the process carried out at the step S102 indicates that the resource-utilization condition text is valid, that is, if the digital signature encrypted by the private-key 35 of the main apparatus 12-1 could be decrypted by using the public-key 39 forming a pair in conjunction with the private-key 35, on the other hand, the CPU 111 determines that no interpolation has been carried out on a communication between the main apparatus 12-1 and the main apparatus 12-2 and the relation between the main apparatus 12-1 and the main apparatus 12-2 is normal. In this case, the flow of the processing goes on from step S102 to a step S103.

By determining whether or not the resource-utilization condition text is valid by using a digital signature as described above, the safety of the information-processing system 1 can be further enhanced.

In a process carried out at the step S103, the CPU 111 employed in the main apparatus 12-2 transmits a value transfer request to transfer a value from the main apparatus 12-2 to the main apparatus 12-1, that is, a value transfer request to make a payment on behalf of the main apparatus 12-2 to the main apparatus 12-1, to the value issuance apparatus 14.

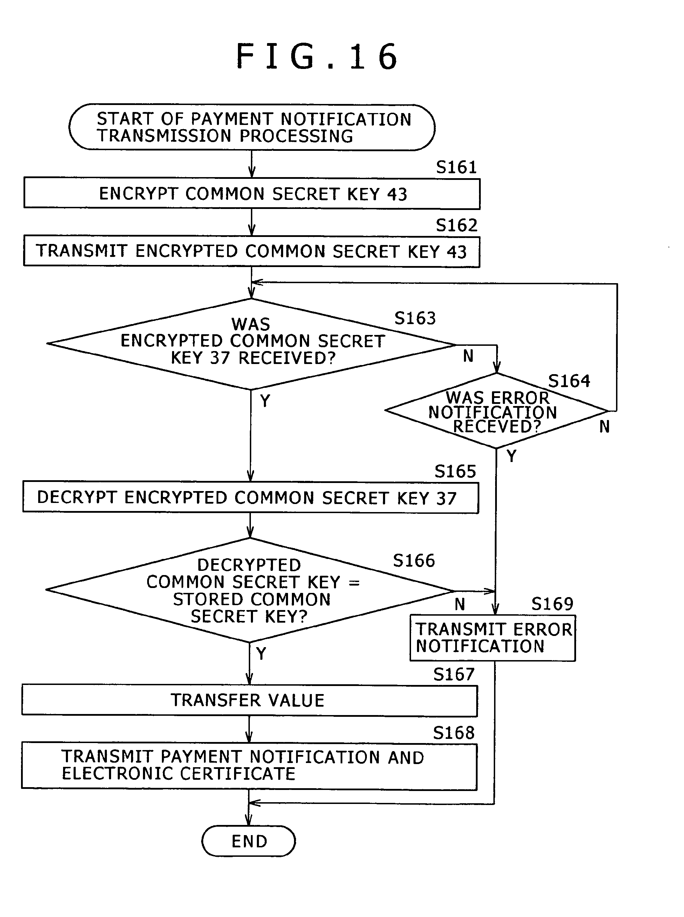

After the process carried out at the step S103 is completed, the flow of the processing goes on to a step S104 at which the CPU 111 employed in the main apparatus 12-2 produces a result of determination as to whether or not an encrypted common private-key 44 transmitted in a process carried out at a step S162 of a flowchart to be described later by referring to Fig. 16 has been received from the value issuance apparatus 14. If the determination result produced by the CPU 111 in a process carried out at the step S104 indicates that an encrypted common private-key 44 has not been received from the value issuance apparatus 14, the flow of the processing goes back to the step S104 at which the CPU 111 repeats the process of the step in a state of waiting for an encrypted common private-key 44 to be received from the value issuance apparatus 14.

If the determination result produced by the CPU 111 of the main apparatus 12-2 in a process carried out at the step S104 indicates that an encrypted common private-key 44 has been received from the value issuance apparatus 14, on the other hand, the flow of the processing goes on to a step S105 at which the CPU 111 employed in the main apparatus 12-2 acquires the public-key 41 corresponding to the private-key 43 owned by the value issuance apparatus 14 from the authentication apparatus 13 and stores the public-key 41 in the RAM 113. Then, the CPU 111 employed in the main apparatus 12-2 controls the encryption/decryption section 117 to decrypt the encrypted common private-key 44 by using the public-key 41 stored in the RAM 113 and stores the common private-key 44 obtained as a result of the decryption process in the RAM 113.

After the process carried out at the step S105 is completed, the flow of the processing goes on to a step S106 at which the CPU 111 employed in the main apparatus 12-2 controls the reader/writer 115 to read out the common private-key 37 and stores the common private-key 37 in the RAM 113. Then, the flow of the processing goes on to a step S107. In a process carried out at the step S107, the CPU 111 employed in the main apparatus 12-2 reads out the decrypted common private-key 44 and the common private-key 37 from the RAM 113, producing a result of determination as to whether or not the decrypted common resource key 44 is equal to the common private-key 37.

If the determination result produced by the CPU 111 of the main apparatus 12-2 in the process carried out at the step S107 indicates that the decrypted common resource key 44 is equal to the common private-key 37, that is, if the common private-key 44 encrypted by the value issuance apparatus 14 by using the private-key 43 in a process carried out at a step S161 of a flowchart to be described later by referring to Fig. 16 has been normally decrypted by the main apparatus 12-2 by using the public-key 41 in the process carried out at a step S106 to result in a common private-key 44 equal to the common private-key 37, the CPU 111 employed in the main apparatus 12-2 recognizes no interpolation carried out on a communication line between the value issuance apparatus 14 and the main apparatus 12-2. In this case, the flow of the processing goes on from the step S107 to a step S108.

In a process carried out at the step S108, the CPU 111 employed in the main apparatus 12-2 controls the encryption/decryption section 117 to encrypt the common private-key 37 stored in the RAM 113 by using the public-key 41 also stored in the RAM 113. After the process carried out at the step S109 is completed, the flow of the processing goes on to a step S110 at which the CPU 111 employed in the main apparatus 12-2 transmits the encrypted common private-key 37 to the value issuance apparatus 14 and returns the control of the execution to the flowchart shown in Fig. 8.

If the determination result produced by the CPU 111 of the main apparatus 12-2 in the process carried out at the step S107 indicates that the common private-key 43 decrypted in the process carried out at the step S106 is not equal to the common private-key 37, on the other hand, the CPU 111 employed in the main apparatus 12-2 recognizes that an interpolation has been carried out on a communication line between the value issuance apparatus 14 and the main apparatus 12-2. In this case, the flow of the processing goes on from the step S107 to a step S110 at which the CPU 111 transmits a message revealing an abnormal relation between the value issuance apparatus 14 and the main apparatus 12-2 to the value issuance apparatus 14. Finally, the CPU 111 employed in the main apparatus 12-2 returns the control of the execution to the flowchart shown in Fig. 8.

If the determination result produced by the CPU 111 of the main apparatus 12-2 in the process carried out at the step S101 indicates that the resource-utilization condition text has not been received from the main apparatus 12-1, a resource of which is requested by the mobile terminal 12-2, on the other hand, the flow of the processing goes on to a step S111 at which the CPU 111 employed in the main apparatus 12-2 produces a result of determination as to whether or not an error notification transmitted by the main apparatus 12-1 in a process carried out at a step S148 of a flowchart to be explained later by referring to Fig. 13 as a notification revealing impossibility to issue a resource-utilization condition text has been received from the main apparatus 12-1. If the determination result produced by the CPU 111 of the main apparatus 12-2 in the process carried out at the step S110 indicates that an error notification has not been received from the main apparatus 12-1, the flow of the processing goes back to the step S101 at which the CPU 111 employed in the main apparatus 12-2 repeats the process of this step.

If the determination result produced by the CPU 111 of the main apparatus 12-2 in the process carried out at the step S111 indicates that an error notification has been received from the main apparatus 12-1, that is, if the main apparatus 12-1 did not issue a resource-utilization condition text, disapproving utilization of the resource by the mobile terminal 11-2, on the other hand, execution of the processing represented by this flowchart is ended.

Fig. 11 is a diagram showing a typical electronic certificate.

As shown in Fig. 11, the electronic certificate shows the version number of the certificate, the sequence number of the certificate, parameters and algorithm used in a signature, the name of the authentication apparatus 13 issuing the certificate, the validity expiration date of the certificate, an issued ID of the apparatus receiving the certificate and a public-key of the apparatus receiving the certificate.

The authentication apparatus 13 issues such an electronic certificate to each of the main apparatus 12-1, the main apparatus 12-2 and the value issuance apparatus 14. Each of the main apparatus 12-1, the main apparatus 12-2 and the value issuance apparatus 14 transmits this certificate and an encrypted text to another apparatus to show the other apparatus that the presenting apparatus is a valid apparatus. The other apparatus is capable of decrypting the encrypted text received along with the electronic certificate by using a public-key included in the certificate as a public-key of the transmitting apparatus in order to recognize the validity of the encrypted text.

Fig. 12 shows a flowchart referred to in explanation of the resource-information transmission processing carried out by the main apparatus 12-1 shown in Fig. 6. The resource-information transmission processing is started for example when the main apparatus 12-1 receives a signal making a request for a broadcast from the mobile terminal 11-2 in the process carried out at the step S41 of the flowchart shown in Fig. 5.

In a process carried out at a step S120, the CPU 91 employed in the main apparatus 12-1 produces a result of determination as to whether or not a broadcast request made by the mobile terminal 11-2 is to be approved. If the determination result produced by the CPU 91 of the main apparatus 12-1 in the process carried out at the step S120 indicates that a broadcast request made by the mobile terminal 11-2 is to be approved, the flow of the processing goes on to a step S121 at which the CPU 91 transmits a notice of the approval of the request for a resource to the mobile terminal 11-2.

After the process carried out at the step S121 is completed, the flow of the processing goes on to a step S122 at which the CPU 91 employed in the main apparatus 12-1 enters a state of waiting for a signal making a request for information on resources. The signal making a request for information on resources is transmitted by the mobile terminal 11-2 in the process carried out at the step S43 of the flowchart shown in Fig. 5. As the CPU 91 employed in the main apparatus 12-1 receives the signal making a request for information on resources, the flow of the processing goes on to a step S123.

In a process carried out at the step S123, the CPU 91 employed in the main apparatus 12-1 controls the input/output section 97 to acquire resource information of a resource from the resource apparatus 15-1 and 15-2 through the data bus 98 and the resource control section 99. The resource, the resource information of which is being acquired, is information that can be presented or that is allowed to be presented to the main apparatus 12-2. By the same token, the CPU 91 controls the input/output section 97 to acquire information on resources from the resource apparatus 16-1 and 16-2 through the data bus 98. Then, the CPU 91 transmits the acquired information on resources to the mobile terminal 11-2 and ends execution of the processing represented by this flowchart.

If the determination result produced by the CPU 91 of the main apparatus 12-1 in the process carried out at the step S120 indicates that a broadcast request made by the mobile terminal 11-2 is not to be approved, on the other hand, the flow of the processing goes on to a step S124 at which the CPU 91 transmits an error notification revealing a disapproval of the request for a broadcast to the mobile terminal 11. Then, the CPU 91 ends execution of the processing represented by this flowchart.

Fig. 13 shows a flowchart referred to in explanation of the resource-utilization condition text issuance processing carried out by the main apparatus 12-1, which is shown in Fig. 6, to issue a resource-utilization condition text. The resource-utilization condition text issuance processing is started when the main apparatus 12-1 receives an encrypted utilization-right issuance request text and an electronic certificate, which are transmitted by the main apparatus 12-2 in the process carried out at the step S100 of the flowchart shown in Fig. 10. It is to be noted that the main apparatus 12-1 has already received an issued electronic certificate shown in Fig. 11 from the authentication apparatus 13 and stored the certificate in the RAM 113.

In a process carried out at a step S141, the CPU 111 employed in the main apparatus 12-1 acquires a public-key 40 from an electronic certificate received from the main apparatus 12-2 along with a utilization-right issuance request text. Then, the flow of the processing goes on to a step S142. In a process carried out at a step S142, the CPU 111 employed in the main apparatus 12-1 acquires a digital signature encrypted by using the private-key 38 from the utilization-right issuance request text received from the main apparatus 12-2. Then, the CPU 111 controls the encryption/decryption section 117 to decrypt the digital signature by using the public-key 40 acquired in the process carried out at the step S141 as a public-key forming a pair in conjunction with the private-key 38.

After the process carried out at the step S142 is completed, the flow of the processing goes on to a step S143 at which the CPU 111 employed in the main apparatus 12-1 produces a result of determination as to whether or not the utilization-right issuance request text is valid. That is to say, the CPU 111 employed in the main apparatus 12-1 produces a result of determination as to whether or not the digital signature has been decrypted normally at the step S142. A determination result indicating that the digital signature has been decrypted normally suggests that the encryption/decryption section 117 has decrypted the digital signature, which was encrypted by using the private-key 38, by using the public-key 40 forming a pair in conjunction with the private-key 38. Thus, the CPU 111 employed in the main apparatus 12-1 recognizes that no interpolation has been carried out on a communication line between the main apparatus 12-1 and the main apparatus 12-2 and determines that the utilization-right issuance request text is valid.

If the determination result produced by the CPU 111 employed in the main apparatus 12-1 in a process carried out at the step S143 indicates that the utilization-right issuance request text is not valid, the flow of the processing goes on to a step S148 at which the CPU 111 employed in the main apparatus 12-1 transmits an error notification revealing a disapproval of utilization of a resource to the main apparatus 12-2. Finally, the CPU 111 employed in the main apparatus 12-1 ends execution of the processing represented by this flowchart.

If the determination result produced by the CPU 111 employed in the main apparatus 12-1 in a process carried out at the step S143 indicates that the utilization-right issuance request text is valid, on the other hand, the flow of the processing goes on to a step S144 at which the CPU 111 employed in the main apparatus 12-1 transmits an evaluation request signal to the authentication apparatus 13 to request the authentication apparatus 13 to produce a result of determination as to whether or not the electronic certificate received from the main apparatus 12-2 is valid. Then, the flow of the processing goes on to a step S145.

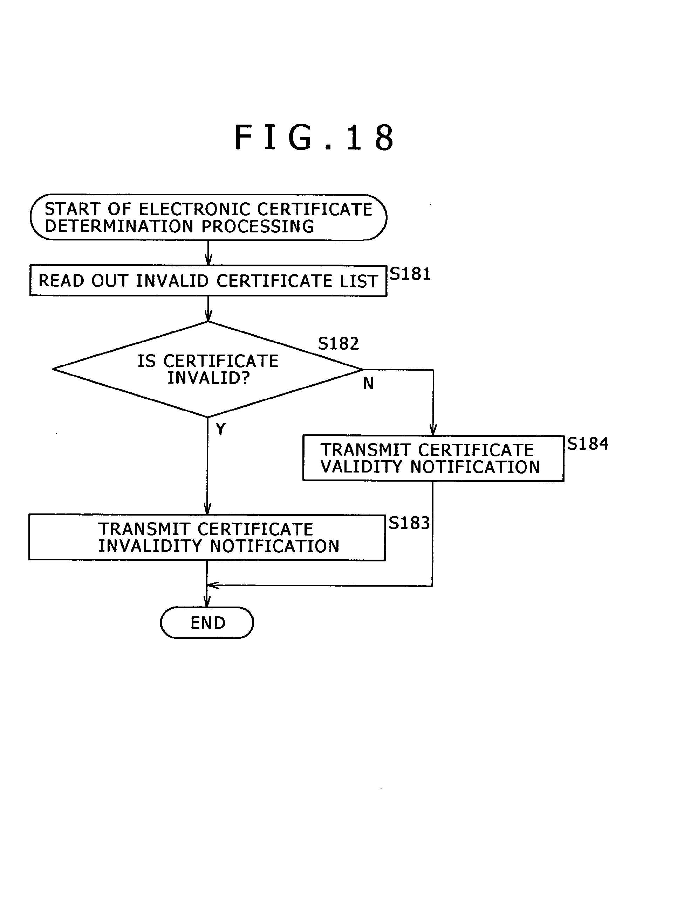

In a process carried out at a step S145, the CPU 111 employed in the main apparatus 12-1 produces a result of determination as to whether or not an electronic-certificate evaluation transmitted by the authentication apparatus 13 in a process carried out at a step S183 or S184 of a flowchart to be described later by referring to Fig. 18 has been received from the authentication apparatus 13. If the determination result produced by the CPU 111 of the main apparatus 12-1 in a process carried out at the step S145 indicates that such an electronic-certificate evaluation has not been received from the authentication apparatus 13, the flow of the processing goes back to the step S145 at which the CPU 111 repeatedly carries out the process in a waiting state till such an electronic-certificate evaluation is received.

As the determination result produced by the CPU 111 of the main apparatus 12-1 in a process carried out at the step S145 indicates that such an electronic-certificate evaluation has been received from the authentication apparatus 13, the flow of the processing goes on to a step S146 at which the CPU 111 employed in the main apparatus 12-1 produces a result of determination as to whether or not the electronic-certificate evaluation received from the authentication apparatus 13 indicates a valid electronic certificate. If the determination result produced by the CPU 111 employed in the main apparatus 12-1 in a process carried out at the step S146 indicates that the electronic-certificate evaluation received from the authentication apparatus 13 shows a valid electronic certificate, that is, the electronic certificate received from the main apparatus 12-2 along with a utilization-right issuance request text is not invalid (or is a base certificate), the flow of the processing goes on to a step S147 at which the CPU 111 employed in the main apparatus 12-1 electronically creates a resource-utilization condition text including a price for the approval of utilization of a resource.

At that time, the CPU 111 employed in the main apparatus 12-1 controls the encryption/decryption section 117 to encrypt the electronic signature by using the private-key 35 in order to show the validity of its own and add the encrypted electronic signature to the resource-utilization condition text. Then, the CPU 111 transmits the resource-utilization condition text including the encrypted electronic signature and the electronic certificate stored in the RAM 113 to the main apparatus 12-2. Finally, the CPU 111 employed in the main apparatus 12-1 ends execution of the processing represented by this flowchart.

If the determination result produced by the CPU 111 employed in the main apparatus 12-1 in a process carried out at the step S146 indicates that the electronic-certificate evaluation received from the authentication apparatus 13 does not show a valid electronic certificate (or a base certificate), on the other hand, utilization of a resource cannot be approved. In this case, the flow of the processing goes on to the step S148 at which the CPU 111 employed in the main apparatus 12-1 transmits an error notification revealing a disapproval of utilization of a resource to the main apparatus 12-2. Finally, the CPU 111 employed in the main apparatus 12-1 ends execution of the processing represented by this flowchart.

It is to be noted that processing carried out by the main apparatus 12-1 to issue a right text describing a right to utilize a resource can be carried out in the same way as the flowchart shown in Fig. 13. However, the processing to be carried out by the main apparatus 12-1 to issue a right text is started when the main apparatus 12-1 receives a payment notification and an electronic certificate, which are transmitted by the value issuance apparatus 14 in a process carried out at a step S168 of the flowchart to be described later by referring to Fig. 16, from the value issuance apparatus 14 as described below.

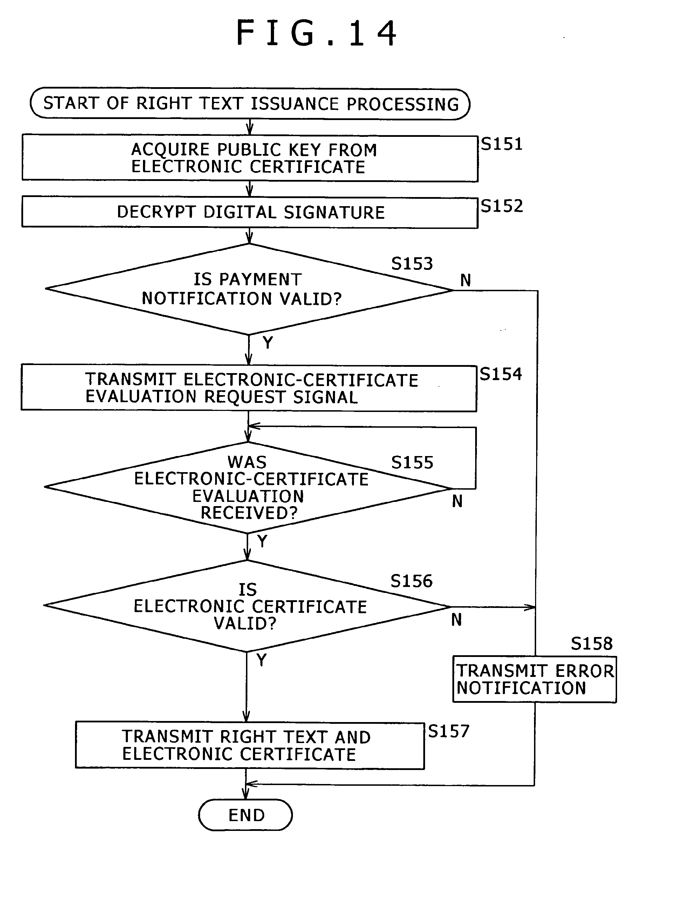

Fig. 14 shows a flowchart referred to in explanation of the right-text issuance processing carried out by the main apparatus 12-1 shown in Fig. 6 to issue the text of a right to utilize a resource. As described above, the processing to be carried out by the main apparatus 12-1 to issue a right text is started when the main apparatus 12-1 receives a payment notification and an electronic certificate, which are transmitted by the value issuance apparatus 14 in a process carried out at a step S168 of the flowchart to be described later by referring to Fig. 16, from the value issuance apparatus 14.

It is to be noted that the main apparatus 12-1 has already received an issued electronic certificate shown in Fig. 11 from the authentication apparatus 13 and stored the certificate in the RAM 113.

In a process carried out at a step S151, the CPU 111 employed in the main apparatus 12-1 acquires a public-key 41 from an electronic certificate received from the value issuance apparatus 14 along with a payment notification. Then, the flow of the processing goes on to a step S152 at which the CPU 111 employed in the main apparatus 12-1 acquires a digital signature encrypted by using the private-key 43 from the payment notification received from the value issuance apparatus 14. Subsequently, the CPU 111 employed in the main apparatus 12-1 controls the encryption/decryption section 117 to decrypt the digital signature by using the public-key 41 acquired in the process carried out at the step S151.

After the process carried out at the step S152 is completed, the flow of the processing goes on to a step S153 at which the CPU 111 employed in the main apparatus 12-1 produces a result of determination as to whether or not the payment notification is valid. That is to say, the CPU 111 employed in the main apparatus 12-1 produces a result of determination as to whether or not the digital signature has been correctly decrypted. To put it in detail, the CPU 111 employed in the main apparatus 12-1 produces a result of determination as to whether or not the digital signature encrypted by the private-key 43 has been correctly decrypted using the public-key 41 forming a pair in conjunction with the private-key 43. If the result of the determination indicates that the digital signature encrypted by the private-key 43 has been correctly decrypted using the public-key 41, the CPU 111 employed in the main apparatus 12-1 recognizes no interpolation carried out on the communication line between the main apparatus 12-1 and the value issuance apparatus 14, determining that the payment notification is valid.

If the determination result produced by the CPU 111 of the main apparatus 12-1 in the process carried out at the step S153 indicates that the payment notification is not valid, the flow of the processing goes on to a step S158 at which the CPU 111 employed in the main apparatus 12-1 transmits an error notification revealing a disapproval of utilization of a resource to the main apparatus 12-2. Finally, the CPU 111 employed in the main apparatus 12-1 ends execution of the processing represented by this flowchart.

If the determination result produced by the CPU 111 of the main apparatus 12-1 in the process carried out at the step S153 indicates that the payment notification is valid, on the other hand, the flow of the processing goes on to a step S154 at which the CPU 111 employed in the main apparatus 12-1 transmits an evaluation request signal making a request for evaluation as to whether or not the electronic certificate received from the value issuance apparatus 14 is valid to the authentication apparatus 13. Then, the flow of the processing goes on to a step S155.

In a process carried out at the step S155, the CPU 111 employed in the main apparatus 12-1 produces a result of determination as to whether or not an electronic-certificate evaluation transmitted by the authentication apparatus 13 in the process carried out at the step S183 or S184 of the flowchart to be described later by referring to Fig. 18 has been received from the authentication apparatus 13. If the determination result produced by the CPU 111 employed in the main apparatus 12-1 in a process carried out at the step S155 indicates that such an electronic-certificate evaluation has not been received from the authentication apparatus 13, the flow of the processing goes back to the step S155 at which the CPU 111 repeatedly carries out the process in a waiting state till such an electronic-certificate evaluation is received.

As the determination result produced by the CPU 111 employed in the main apparatus 12-1 in a process carried out at the step S155 indicates that such an electronic-certificate evaluation has been received from the authentication apparatus 13, the flow of the processing goes on to a step S156 at which the CPU 111 employed in the main apparatus 12-1 produces a result of determination as to whether or not the electronic-certificate evaluation received from the authentication apparatus 13 indicates a valid electronic certificate. If the determination result produced by the CPU 111 employed in the main apparatus 12-1 in a process carried out at the step S156 indicates that the electronic-certificate evaluation received from the authentication apparatus 13 shows a valid electronic certificate, that is, the electronic certificate received from the main apparatus 12-2 along with a utilization-right issuance request text is valid, the flow of the processing goes on to a step S157 at which the CPU 111 employed in the main apparatus 12-1 electronically creates a right text describing a right to utilize a resource.

At that time, the CPU 111 employed in the main apparatus 12-1 controls the encryption/decryption section 117 to encrypt the electronic signature by using the private-key 35 in order to show the validity of its own and add the encrypted electronic signature to the right text. Then, the CPU 111 transmits the right text including the encrypted electronic signature and the electronic certificate stored in the RAM 113 to the main apparatus 12-2. Finally, the CPU 111 employed in the main apparatus 12-1 ends execution of the processing represented by this flowchart.

If the determination result produced by the CPU 111 employed in the main apparatus 12-1 in a process carried out at the step S156 indicates that the electronic-certificate evaluation received from the authentication apparatus 13 does not show a valid electronic certificate (or a base certificate), on the other hand, utilization of a resource cannot be approved. In this case, the flow of the processing goes on to the step S158 at which the CPU 111 employed in the main apparatus 12-1 transmits an error notification revealing a disapproval of utilization of a resource to the main apparatus 12-2. Finally, the CPU 111 employed in the main apparatus 12-1 ends execution of the processing represented by this flowchart.

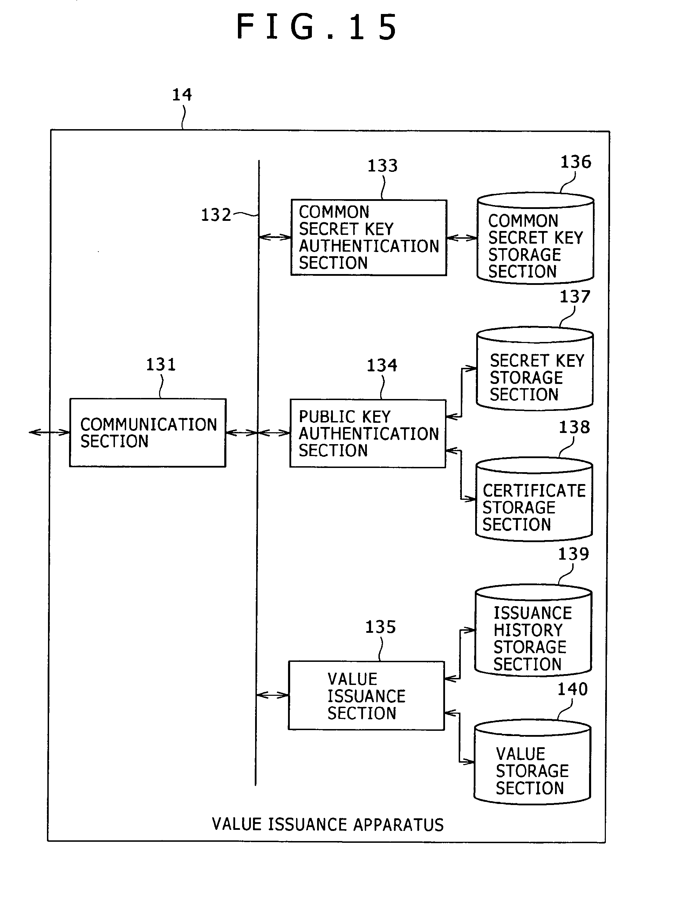

Fig. 15 is a block diagram showing a typical detailed configuration of the value issuance apparatus 14 employed in the communication system shown in Fig. 1.

As shown in the figure, the value issuance apparatus 14 includes a communication section 131, a data bus 132, a common private-key authentication section 133, a public-key authentication section 134, a value issuance section 135, a common private-key storage section 136, a secret-key storage section 137, a certificate storage section 138, a issuance-history storage section 139 and a value storage section 140.

The communication section 131 is a unit for receiving signals from the main apparatus 12-1, the main apparatus 12-2 and the authentication apparatus 13 through the Internet 21 as well as transmitting signals to the main apparatus 12-1, the main apparatus 12-2 and the authentication apparatus 13 by way of the Internet 21. The communication section 131 is connected to the common private-key authentication section 133, the public-key authentication section 134 and the value issuance section 135 through the data bus 132.

The common private-key authentication section 133 is a unit for producing a result of determination as to whether or not a main apparatus 12 making an access to the value issuance apparatus 14 is a valid apparatus on the basis of a common private-key 44 stored in the common private-key storage section 136. In addition, the common private-key authentication section 133 also transmits a common private-key 34 or 37 to a main apparatus 12, the value of which is managed by the value issuance apparatus 14, to be stored in the non-contact IC card 121 of the main apparatus 12. The common private-key 34 or 37 is a key identical with the common private-key 44.

By storing either of the common private-key 34 and 37, which are identical with the common private-key 44 of the value issuance apparatus 14, in the non-contact IC card 121 of the main apparatus 12 as described above, an authentication process can be carried out between the main apparatus 12 and the value issuance apparatus 14. Thus, the user can utilize only the mobile terminal 11, which can communicate with the main apparatus 12, to transfer a value with main apparatus 12.

The public-key authentication section 134 is a unit for carrying out processing of a public-key encryption system on the basis of the private-key 43 stored in the secret-key storage section 137 and an electronic certificate stored in the certificate storage section 138 by activating the communication section 131 for communicating with the main apparatus 12-1, the main apparatus 12-2 and the authentication apparatus 13.

The value issuance section 135 is a unit for issuing a value on the basis of a value (or, strictly speaking, an electronic value) stored in the value storage section 140 and storing a history of issuance of such values in the issuance-history storage section 139.

It is to be noted that the value issuance apparatus 14 does not need to be enclosed physically in one box. Instead, the value issuance apparatus 14 can be implemented as a plurality of separated apparatus, which are connected to each other by the data bus 132 and collaborate to carry out the functions of the value issuance apparatus 14.

In addition, the value issuance apparatus 14 can have such a configuration that the value issuance apparatus 14 is capable of settling a price according to an issued value. In addition, a main apparatus 12 may use an owned electronic value in settlement in a network.

Moreover, the electronic value can have any format. An electronic value may be stored in the value storage section 140 employed in the value issuance apparatus 14 in the form of an account. In this case, better safety can be assured.

As an ID used for representing an account for a main apparatus, it is possible to use the apparatus ID included in the certificate of the main apparatus or another ID associated with the main apparatus. In this way, it is possible to provide an account not related to the personal information of the user as an account having a high degree of anonymity.

Furthermore, a value is not stored only in the value storage section 140 employed in the value issuance apparatus 14 in the form of an account, but also in a storage area of a safe device employed in the main apparatus 12. An example of the safe device is the non-contact IC card 121. In this case, an electronic value issued by the value issuance section 135 employed in the value issuance apparatus 14 is transferred to the non-contact IC card 121. When the value issuance apparatus 14 makes a payment of a value from the main apparatus 12-2 to the main apparatus 12-1, for example, the value issuance apparatus 14 acquires a value from the main apparatus 12-2 and transfers the value to the main apparatus 12-1. It is to be noted that a value is transferred after being encrypted in order to allow the value to be transmitted from one apparatus to another safely.

In addition, values can be stored in a storage combination of the value storage section 140 employed in the value issuance apparatus 14 and a safe device employed in the main apparatus 12. To put it concretely, a value of every user is stored in the value storage section 140 employed in the value issuance apparatus 14 in the form of an account managed by the value issuance apparatus 14 as the account for the user and only a required value is transferred to a safety device (for example, the non-contact ID) owned by the user to serve as the wallet of the user.

Fig. 16 shows a flowchart referred to in explanation of payment-notification transmission processing carried out by the value issuance apparatus 14 shown in Fig. 15 to transmit a notification of a payment to the main apparatus 12-1. The payment-notification transmission processing is started when the value issuance apparatus 14 receives a request for a value transfer transmitted by the main apparatus 12-2 in a process carried out at the step S103 of the flowchart shown in Fig. 10. It is to be noted that the value issuance apparatus 14 has already stored an electronic certificate issued by the authentication apparatus 13 in the certificate storage section 138.

In a process carried out at a step S161, the common private-key authentication section 133 reads out the common private-key 44 from the common private-key storage section 136 and the private-key 43 from the secret-key storage section 137, using the private-key 43 in encryption of the common private-key 44. After the process carried out at the step S161 is completed, the flow of the processing goes on to a step S162 at which the common private-key authentication section 133 transmits the encrypted common private-key 44 to the main apparatus 12-2. To put it in detail, the common private-key authentication section 133 supplies the encrypted common private-key 44 to the communication section 131 through the data bus 132 and the communication section 131 then transmits the encrypted common private-key 44 to the main apparatus 12-2. Subsequently, the flow of the processing goes on to a step S163.

In a process carried out at the step S163, the communication section 131 produces a result of determination as to whether or not an encrypted common private-key 37 transmitted by the main apparatus 12-2 in the process carried out at the step S109 of the flowchart shown in Fig. 10 has been received from the main apparatus 12-2. If the determination result produced by the communication section 131 in the process carried out at the step S163 indicates that an encrypted common private-key 37 has not been received from the main apparatus 12-2, the flow of the processing goes on to a step S164 at which at which the communication section 131 produces a result of determination as to whether or not an error notification transmitted by the main apparatus 12-2 in a process carried out at a step S110 of the flowchart explained earlier by referring to Fig. 10 as a notification revealing an invalid relation between the main apparatus 12-2 and the value issuance apparatus 14 has been received from the main apparatus 12-2. If the determination result produced by the communication section 131 in the process carried out at the step S168 indicates that an error notification has not been received from the main apparatus 12-2, the flow of the processing goes back to the step S163 at which the communication section 131 repeats the process of this step.

If the determination result produced by the communication section 131 in the process carried out at the step S164 indicates that an error notification has been received from the main apparatus 12-2, on the other hand, the communication section 131 transmits an error notification revealing a disallowance of a value transfer and, then, execution of the processing represented by this flowchart is terminated. This is because the relation between the main apparatus 12-2 and the value issuance apparatus 14 is not valid.

If the determination result produced by the communication section 131 in the process carried out at the step S163 indicates that an encrypted common private-key 37 has been received from the main apparatus 12-2, on the other hand, the an encrypted common private-key 37 is supplied to the public-key authentication section 134. Then, the flow of the processing goes on from the step S163 to a step S165. In a process carried out at the step S165, the public-key authentication section 134 decrypts the encrypted common private-key 37 by using the private-key 43 stored in the secret-key storage section 137.

After the process carried out at the step S165 is completed, the flow of the processing goes on to a step S166 at which the public-key authentication section 134 supplies the common private-key 37 decrypted in the process carried out at the step S165 to the common private-key authentication section 133, and the common private-key authentication section 133 produces a result of determination as to whether or not the decrypted common private-key 37 is equal to the common private-key 44 stored in the common private-key storage section 136.

If the determination result produced by the common private-key authentication section 133 in the process carried out at the step S166 indicates that the decrypted common private-key 37 is equal to the common private-key 44, the common private-key authentication section 133 recognizes a valid relation between the main apparatus 12-2 and the value issuance apparatus 14. In this case, the flow of the processing goes on from the step S166 to a step S167. That is to say, the common private-key 37 encrypted by the main apparatus 12-1 by using the public key 41 has been normally decrypted by the value issuance apparatus 14 by using the private-key 43 forming a pair in conjunction with the public key 41 to result in a correct common private-key 37. Thus, the value issuance apparatus 14 recognizes no interpolation carried out on the communication line between the value issuance apparatus 14 and the main apparatus 12-2.

In addition, since the common private-key 37 owned by the main apparatus 12-2 is equal to the common private-key 44 owned by the value issuance apparatus 14, the value issuance apparatus 14 is aware of the fact that main apparatus 12-2 recognizes the value issuance apparatus 14 as its partner for managing values. That is to say, since the common private-key 37 equal to the common private-key 44 owned by the value issuance apparatus 14 has been distributed to a safe device provided for the main apparatus 12-2 so that the value issuance apparatus 14 recognizes the fact that the main apparatus 12-2 has the common private-key 37 equal to the common private-key 44, the value issuance apparatus 14 recognizes each access made by the main apparatus 12-2 as a legal access. In this case, the safe device provided for the main apparatus 12-2 is the non-contact IC card 121.

In a process carried out at the step S167, the value issuance section 135 transfers a value from the main apparatus 12-2 to the main apparatus 12-1. To put it concretely, the value issuance section 135 deletes a value corresponding to a predetermined price stored in the value storage section 140 as a price of the main apparatus 12-2 and adds the value as a value corresponding to a predetermined price to the value of the main apparatus 12-1. Thus, an electronic value of the user of the main apparatus 12-2 is paid as a price to utilize a resource connected to the main apparatus 12-1 to the user of the main apparatus 12-1 when the user of the main apparatus 12-2 makes an attempt to utilize the resource. Also in a process carried out at the step S167, the value issuance section 135 generates a transaction-result notification revealing completion of the electronic-value transfer.

By carrying out the processing described above, a user is capable of transferring an electronic value to another user by way of the value issuance apparatus 14.

After the process carried out at the step S167 is completed, the flow of the processing goes on to a step S168 at which the public-key authentication section 134 encrypts a digital signature, which is used for proving validity of its own, by using the private-key 43 stored in the secret-key storage section 137. Then, the public-key authentication section 134 creates a payment notification text with the encrypted digital signature added thereto. The payment notification includes a payment notification for reporting the payment of a value and a receipt describing details of the payment of the value. Subsequently, the public-key authentication section 134 transmits the payment notification text, the electronic certificate stored in the certificate storage section 138 and the transaction-result notification revealing completion of the electronic-value transfer to the main apparatus 12-1 serving as the payee of the electronic-value payment. Finally, execution of the processing represented by this flowchart is ended.

If the determination result produced by the common private-key authentication section 133 in the process carried out at the step S166 indicates that the common private-key 37 decrypted in the process carried out at the step S165 is not equal to the common private-key 44, on the other hand, the common private-key authentication section 133 recognizes an invalid relation between the main apparatus 12-2 and the value issuance apparatus 14. In this case, an error notification revealing a disallowance of the value transfer is transmitted before execution of the processing represented by this flowchart is ended.

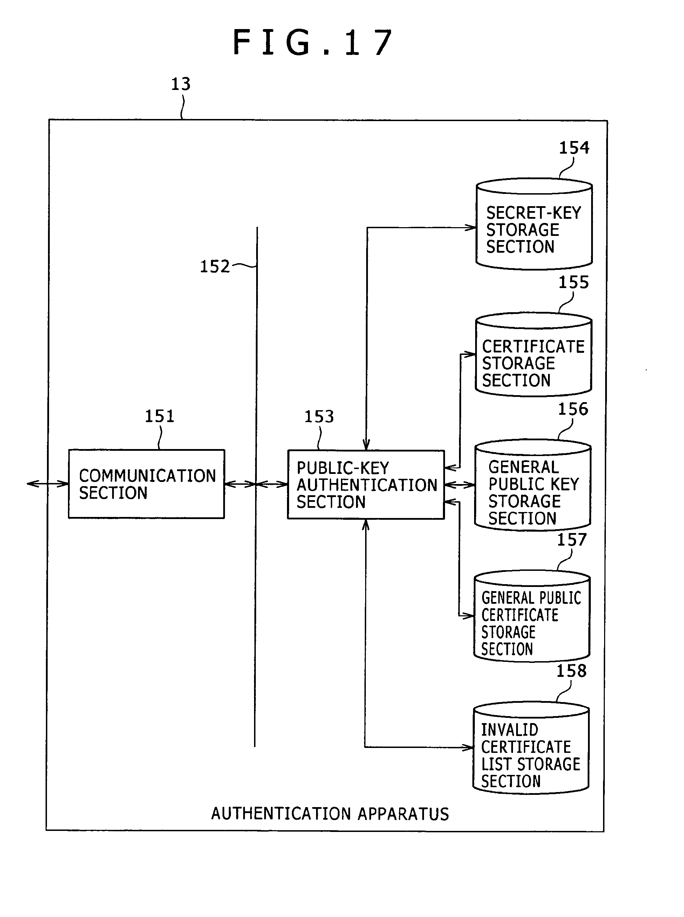

Fig. 17 is a block diagram showing a detailed typical configuration of the authentication apparatus 13 shown in Fig. 1.

As shown in the figure, the authentication apparatus 13 includes a communication section 151, a data bus 152, a public-key authentication section 153, a secret-key storage section 154, a certificate storage section 155, a public-key storage section 156, a general-disclosure certificate storage section 157 and an invalidated-certificate list storage section 158.

The communication section 151 is a unit for receiving signals transmitted by the main apparatus 12-1, the main apparatus 12-2 and the value issuance apparatus 14 by way of the Internet 21 as well as transmitting signals to the main apparatus 12-1, the main apparatus 12-2 and the value issuance apparatus 14 through the Internet 21. The communication section 151 is connected to the public-key authentication section 153 through the data bus 152.

The public-key authentication section 153 is a unit for disclosing a public key stored in the public-key storage section 156 and a general-disclosure electronic certificate stored in the general-disclosure certificate storage section 157 as well as issuing an electronic certificate. In addition, the public-key authentication section 153 also produces a result of determination as to whether or not an electronic certificate is valid.

The secret-key storage section 154 is a memory used for storing the private-key 42. The certificate storage section 155 is a memory used for storing the electronic certificate of the authentication apparatus 13. The public-key storage section 156 is a memory used for storing the public key 39 forming a pair in conjunction with the private-key 35 of the main apparatus 12-1, the public key 40 forming a pair in conjunction with the private-key 38 of the main apparatus 12-2 and the public key 41 forming a pair in conjunction with the private-key 43 of the value issuance apparatus 14.

The general-disclosure certificate storage section 157 is a memory used for storing general-disclosure electronic certificates issued by the public-key authentication section 153. This electronic certificates are provided to the main apparatus 12 and the value issuance apparatus 14. The invalidated-certificate list storage section 158 is a memory for storing an invalid-certificate list showing electronic certificates that have been made invalid. That is to say, entries of the invalid-certificate list are some of the electronic certificates stored in the general-disclosure certificate storage section 157 as electronic certificates that have been made invalid for some reasons.

Fig. 18 shows a flowchart referred to in explanation of electronic-certificate authentication processing carried out by the authentication apparatus 13 shown in Fig. 17. The electronic-certificate authentication processing is started when the authentication apparatus 13 receives a request for evaluation of the validity of an electronic certificate from a main apparatus 12.

In a process carried out at a step S181, the public-key authentication section 153 reads out the invalid-certificate list showing electronic certificates that have been made invalid from the invalidated-certificate list storage section 158. Then, the flow of the processing goes on to a step S182. In a process carried out at the step S182, the public-key authentication section 153 produces a result of determination as to whether or not the electronic certificate, the validity of which is to be evaluated as requested by a signal received from a main apparatus 12 as a signal making a request for such evaluation, has been made invalid. That is to say, the public-key authentication section 153 produces a result of determination as to whether or not the electronic certificate, the validity of which is being evaluated, is included on the invalid-certificate list read out in the process carried out at the step S181.

If the determination result produced by the public-key authentication section 153 in the process carried out at the step S182 indicates that the electronic certificate, the validity of which is being evaluated, has been made invalid, the flow of the processing goes on to a step S183 at which a notification revealing invalidity of the electronic certificate is transmitted to the main apparatus 12 from the communication section 151 by way of the data bus 152. Then, execution of the processing represented by this flowchart is ended.

If the determination result produced by the public-key authentication section 153 in the process carried out at the step S182 indicates that the electronic certificate, the validity of which is being evaluated, has not been made invalid, on the other hand, the flow of the processing goes on to a step S184 at which a notification revealing validity of the electronic certificate is transmitted to the main apparatus 12 from the communication section 151 by way of the data bus 152. Then, execution of the processing represented by this flowchart is ended.

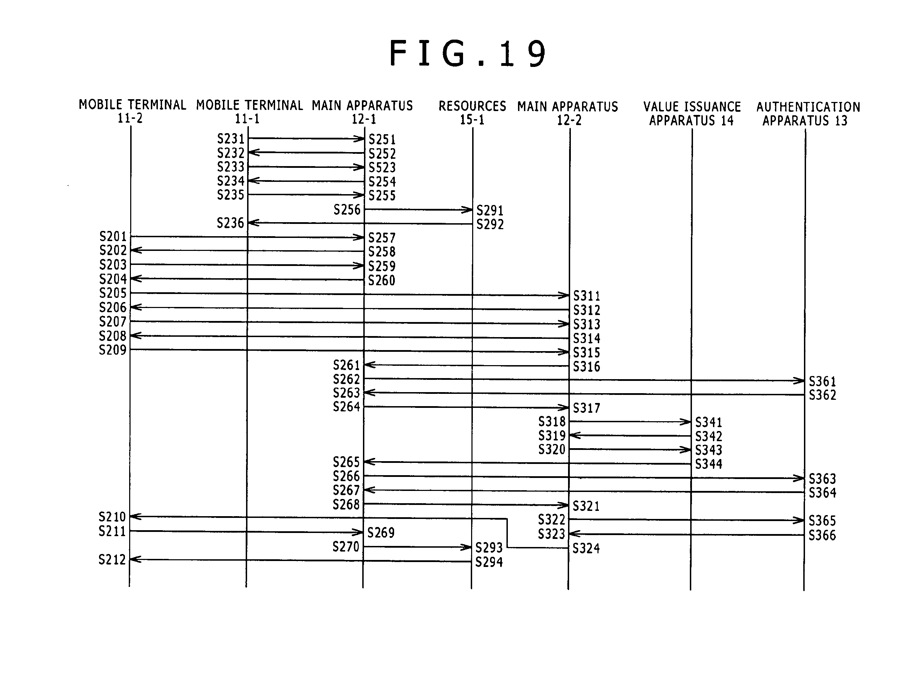

Fig. 19 shows explanatory charts referred to in explanation of the entire resource acquisition processing carried out by the communication system 1 shown in Fig. 1. That is to say, the charts shown in Fig. 19 represent processing carried out by the whole communication system to utilize the resource apparatus 15-1 connected to the main apparatus 12-1 for a case in which the mobile terminals 11-1 and 11-2 are capable of communicating directly with only the main apparatus 12-1 by radio communications.

It is to be noted that the mobile terminals 11-1 and 11-2, the main apparatus 12-1 and 12-2, the authentication apparatus 13 as well as the value issuance apparatus 14, which are involved in the processing shown in Fig. 19, are in normal relations with no interpolations carried out on their communication lines.

In the resource acquisition processing represented by the charts shown in Fig. 19, it is assumed that, first of all, the mobile terminal 11-1 requests a resource from the main apparatus 12-1 serving as the base main apparatus of the mobile terminal 11-1. Later on, the mobile terminal 11-2 requests a resource from the main apparatus 12-1, which is not the base main apparatus of the mobile terminal 11-2.

In a process carried out at a step S231, the mobile terminal 11-1 encrypts the common private-key 31 and transmits the encrypted common private-key 31 to the main apparatus 12-1 in order to carry out a mutual authentication process in conjunction with the main apparatus 12-1.

In a process carried out at a step S251, the main apparatus 12-1 receives the encrypted common private-key 31 from the mobile terminal 11-1. Then, in a process carried out at the next step S252, the main apparatus 12-1 encrypts the common private-key 33 and transmits the encrypted common private-key 33 to the mobile terminal 11-1.

In a process carried out at a step S232, the mobile terminal 11-1 receives the encrypted common private-key 33 from the main apparatus 12-1. Then, in a process carried out at the next step S233, the mobile terminal 11-1 decrypts the encrypted common private-key 33, encrypts the decrypted common private-key 33 and transmits the encrypted common private-key 33 to the main apparatus 12-1.

In a process carried out at a step S253, the main apparatus 12-1 receives the encrypted common private-key 33 from the mobile terminal 11-1. Then, in a process carried out at the next step S254, the main apparatus 12-1 decrypts the encrypted common private-key 33. On the basis of the decrypted common private-key 33, the main apparatus 12-1 produces a result of determination as to whether or not the relation between the mobile terminal 11-1 and the main apparatus 12-1 is valid. In this embodiment, it is assumed that the relation between the mobile terminal 11-1 and the main apparatus 12-1 is valid. Thus, the main apparatus 12-1 decrypts the encrypted common private-key 31 received from the mobile terminal 11-1 in a process carried out at the step S251, encrypts the decrypted common private-key 31 and transmits the encrypted common private-key 31 to the mobile terminal 11-1.

In a process carried out at a step S234, the mobile terminal 11-1 receives the encrypted common private-key 31 from the main apparatus 12-1 and decrypts the encrypted common private-key 31. On the basis of the decrypted common private-key 31, the mobile terminal 11-1 produces a result of determination as to whether or not the relation between the mobile terminal 11-1 and the main apparatus 12-1 is valid. In this embodiment, it is assumed that the relation between the mobile terminal 11-1 and the main apparatus 12-1 is valid. Thus, the mutual authentication process is completed successfully. Then, in a process carried out at a step S235, the mobile terminal 11-1 transmits a signal making a request for a resource to the main apparatus 12-1.

That is to say, by carrying out the mutual authentication of the mobile terminal 11-1 and the main apparatus 12-1, in the communication system 1, it is possible to assure the fact that the user operating the mobile terminal 11-1 is an authorized user.

In a process carried out at a step S255, the main apparatus 12-1 receives the signal making a request for a resource from the mobile terminal 11-1. Then, in a process carried out at the next step S256, the main apparatus 12-1 transmits a signal making a request for a resource to the resource apparatus 15-1 on the basis of the signal received from the mobile terminal 11-1 as a signal making a request for a resource.

In a process carried out at a step S291, the resource apparatus 15-1 receives the signal making a request for a resource from the main apparatus 12-1. Then, in a process carried out at the next step S292, the resource apparatus 15-1 transmits the requested resource to the mobile terminal 11-1 by way of the main apparatus 12-1 in accordance with the signal received from the main apparatus 12-1 as a signal making a request for a resource.

In a process carried out at a step S236, the mobile terminal 11-1 receives the requested resource transmitted by the resource apparatus 15-1 by way of the main apparatus 12-1. Thus, the mobile terminal 11-1 is put in a state of being capable of utilizing the resource apparatus 15-1.

On the other hand, in a process carried out at a step S201, the mobile terminal 11-2 transmits a signal making a request for device search to the main apparatus 12-1, which is not the base main apparatus of the mobile terminal 11-2, in order to obtain information on resources connected to the main apparatus 12-1.

In a process carried out at a step S257, the main apparatus 12-1 receives the signal making a request for device search from the mobile terminal 11-2 and produces a result of determination as to whether or not to approve the request. Then, in a process carried out at the next step S258 of the charts shown in Fig. 19, the main apparatus 12-1 approves the request for device search and transmits a signal approving the request for device search to the mobile terminal 11-2.

In a process carried out at a step S202, the mobile terminal 11-2 receives the signal approving the request for device search from the main apparatus 12-1. Then, in a process carried out at the next step S203, the mobile terminal 11-2 transmits a signal to the main apparatus 12-1 as a signal making a request for information on resources acquirable by the main apparatus 12-1, that is, information on resources that can be supplied by the main apparatus 12-1 to the mobile terminal 11-2.

In a process carried out at a step S259, the main apparatus 12-1 receives the signal making a request for information on such resources from the mobile terminal 11-2. Then, in a process carried out at the next step S260, the main apparatus 12-1 transmits the requested information on resources to the mobile terminal 11-2.

In a process carried out at a step S204, the mobile terminal 11-2 receives the requested information on resources from the main apparatus 12-1. Then, in a process carried out at the next step S205, the mobile terminal 11-2 encrypts the common private-key 32 and transmits the encrypted common private-key 32 to the main apparatus 12-2 in order to carry out a mutual authentication process in conjunction with the main apparatus 12-2.

In a process carried out at a step S311, the main apparatus 12-2 receives the encrypted common private-key 32 from the mobile terminal 11-2. Then, in a process carried out at the next step S312, the main apparatus 12-2 encrypts the common private-key 36 and transmits the encrypted common private-key 36 to the mobile terminal 11-2.

In a process carried out at a step S206, the mobile terminal 11-2 receives the encrypted common private-key 36 from the main apparatus 12-2 and decrypts the encrypted common private-key 36. Then, the mobile terminal 11-2 produces a result of determination as to whether or not the relation between the mobile terminal 11-2 and the main apparatus 12-2 is valid on the basis of the decrypted common private-key 36. In this embodiment, it is assumed that the relation between the mobile terminal 11-2 and the main apparatus 12-2 is valid. Thus, in a process carried out at the next step S207, the mobile terminal 11-2 again encrypts the decrypted common private-key 36 and transmits the encrypted common private-key 36 to the main apparatus 12-2.

In a process carried out at a step S313, the main apparatus 12-2 receives the encrypted common private-key 36 from the mobile terminal 11-2 and decrypts the encrypted common private-key 36 to obtain the common private-key 36. On the basis of the decrypted common private-key 36, the main apparatus 12-2 produces a result of determination as to whether or not the relation between the mobile terminal 11-2 and the main apparatus 12-2 is valid. In this embodiment, it is assumed that the relation between the mobile terminal 11-2 and the main apparatus 12-2 is valid. Thus, in a process carried out at the next step S314, the main apparatus 12-2 decrypts the encrypted common private-key 32 received from the mobile terminal 11-2 in a process carried out at the step S311, encrypts the decrypted common private-key 32 and transmits the encrypted common private-key 32 to the mobile terminal 11-2.

In a process carried out at a step S208, the mobile terminal 11-2 receives the encrypted common private-key 32 from the main apparatus 12-2 and decrypts the encrypted common private-key 32. On the basis of the decrypted common private-key 32, the mobile terminal 11-2 produces a result of determination as to whether or not the relation between the mobile terminal 11-2 and the main apparatus 12-2 is valid. In this embodiment, it is assumed that the relation between the mobile terminal 11-2 and the main apparatus 12-2 is valid. Thus, the mutual authentication process is completed successfully. Then, in a process carried out at the next step S209, the mobile terminal 11-2 transmits a signal making a request for a resource to the main apparatus 12-2.

In a process carried out at a step S315, the main apparatus 12-2 receives the signal making a request for a resource from the mobile terminal 11-2. Then, in a process carried out at the next step S316, the main apparatus 12-2 transmits an electronic certificate and a utilization-right issuance request, which shows a descriptor of information on resources and a resource-utilization method to the main apparatus 12-1, to the main apparatus 12-1.

In a process carried out at a step S261, the main apparatus 12-1 receives the electronic certificate and the utilization-right issuance request from the main apparatus 12-2. Then, in a process carried out at the next step S262, the main apparatus 12-1 transmits a request for determination as to whether or not the electronic certificate is valid to the authentication apparatus 13.

In a process carried out at a step S361, the authentication apparatus 13 receives the request for determination from the main apparatus 12-1, and produces a result of the determination as to whether or not the electronic certificate is valid. It is to be noted that, in this embodiment, the electronic certificate is assumed to be a valid certificate. Thus, in a process carried out at the next step S362, the authentication apparatus 13 transmits a signal, which indicates that the electronic certificate transmitted by the main apparatus 12-1 is valid, to the main apparatus 12-1.

In a process carried out at a step S263, the main apparatus 12-1 receives the signal indicating that the electronic certificate is valid from the authentication apparatus 13. Then, in a process carried out at the next step S264, the main apparatus 12-1 transmits an electronic certificate and a resource-utilization condition text including a price to utilize the resource to the main apparatus 12-2.

In a process carried out at a step S317, the main apparatus 12-2 receives the electronic certificate and the resource-utilization condition text from the main apparatus 12-1. Then, in a process carried out at the next step S318, the main apparatus 12-2 transmits a value transfer request to the value issuance apparatus 14.

In a process carried out at a step S341, the value issuance apparatus 14 receives the value transfer request from the main apparatus 12-2. Then, in a process carried out at the next step S342, the value issuance apparatus 14 encrypts the common private-key 44 and transmits the encrypted common private-key 44 to the main apparatus 12-2 in order to carry out a mutual authentication process in conjunction with the main apparatus 12-2.

In a process carried out at a step S320, the main apparatus 12-2 receives the encrypted common private-key 44 from the value issuance apparatus 14 and decrypts the encrypted common private-key 44. Then, the main apparatus 12-2 produces a result of determination as to whether or not the relation between the main apparatus 12-2 and the value issuance apparatus 14 is valid on the basis of the decrypted common private-key 44. In this embodiment, it is assumed that the relation between the main apparatus 12-2 and the value issuance apparatus 14 is valid. Thus, in a process carried out at the next step S320, the main apparatus 12-2 encrypts the common private-key 37 and transmits the encrypted common private-key 37 to the value issuance apparatus 14.

In a process carried out at a step S343, the value issuance apparatus 14 receives the encrypted common private-key 37 from the main apparatus 12-2 and decrypts the encrypted common private-key 37. Then, the value issuance apparatus 14 produces a result of determination as to whether or not the relation between the main apparatus 12-2 and the value issuance apparatus 14 is valid on the basis of the decrypted common private-key 37. In this embodiment, it is assumed that the relation between the main apparatus 12-2 and the value issuance apparatus 14 is valid. Thus, in a process carried out at the next step S344, the value issuance apparatus 14 transfers a value to the main apparatus 12-1 in accordance with the value transfer request received in a process carried out at the step S341. That is to say, in this case, the value issuance apparatus 14 transfers a value from the user of the main apparatus 12-1 to the user of the main apparatus 12-1, transmitting an electronic certificate and a payment notification, which informs the main apparatus 12-1 that a value has been transferred, to the main apparatus 12-1.

In a process carried out at a step S265, the main apparatus 12-1 receives the electronic certificate and the payment notification from the value issuance apparatus 14. Then, in a process carried out at the next step S266, the main apparatus 12-1 transmits a request for determination as to whether or not the electronic certificate is valid to the authentication apparatus 13.

In a process carried out at a step S363, the authentication apparatus 13 receives the request for determination from the main apparatus 12-1, and produces a result of the determination as to whether or not the electronic certificate of the main apparatus 12-2 is valid. In this embodiment, it is assumed that the electronic certificate of the main apparatus 12-2 is valid. Thus, in a process carried out at the next step S364, the authentication apparatus 13 transmits a signal, which indicates that the electronic certificate transmitted by the main apparatus 12-1 is valid, to the main apparatus 12-1.

In a process carried out at a step S267, the main apparatus 12-1 receives the signal indicating that the electronic certificate is valid from the authentication apparatus 13. Then, in a process carried out at the next step S268, the main apparatus 12-1 issues a right text describing a right to utilize a resource, transmitting an electronic certificate and the right text to the main apparatus 12-2.

In a process carried out at a step S321, the main apparatus 12-2 receives the electronic certificate and the right text from the main apparatus 12-1. Then, in a process carried out at the next step S322, the main apparatus 12-2 transmits a request for determination as to whether or not the electronic certificate is valid to the authentication apparatus 13.

In a process carried out at a step S365, the authentication apparatus 13 receives the request for determination from the main apparatus 12-2, and produces a result of the determination as to whether or not the electronic certificate of the main apparatus 12-1 is valid. In this embodiment, it is assumed that the electronic certificate of the main apparatus 12-1 is valid. Thus, in a process carried out at the next step S366, the authentication apparatus 13 transmits a signal, which indicates that the electronic certificate transmitted by the main apparatus 12-2 is valid, to the main apparatus 12-2.

In a process carried out at a step S323, the main apparatus 12-2 receives the signal indicating that the electronic certificate is valid from the authentication apparatus 13. Then, in a process carried out at the next step S324, the main apparatus 12-2 transmits the right text received from the main apparatus 12-1 in the process carried out at the step S321 to the mobile terminal 11-2.

In a process carried out at a step S210, the mobile terminal 11-2 receives the right text from the main apparatus 12-1. Then, in a process carried out at the next step S211, the mobile terminal 11-2 transmits the right text and a signal making a request for a resource to the main apparatus 12-1.

In a process carried out at a step S269, the main apparatus 12-1 receives the right text and the signal making a request for a resource from the mobile terminal 11-2. Then, in a process carried out at the next step S270, the main apparatus 12-1 transmits a signal making a request for the resource to the resource apparatus 15-1.

In a process carried out at a step S293, the resource apparatus 15-1 receives the signal making a request for the resource from the main apparatus 12-1. Then, in a process carried out at the next step S294, the resource apparatus 15-1 transmits the requested resource to the mobile terminal 11-2 by way of the main apparatus 12-1.

In a process carried out at a step S212, the mobile terminal 11-2 receives the requested resource from the resource apparatus 15-1.

As described above, by receiving a right text from the main apparatus 12-1, the mobile terminal 11-2 is capable of utilizing the resource apparatus 15-1 connected to the main apparatus 12-1.

As explained earlier, in the communication system 1, the value issuance apparatus 14 transmits the common private-keys 34 and 37 identical with the common private-key 44 to the main apparatus 12 for managing values to be stored in the non-contact IC card 121 of the main apparatus 12. The main apparatus 12 issues a non-contact IC card 71 for a user, the personal information of which has been stored in the main apparatus 12, as a card for storing the common private-key for the main apparatus 12 so as to enable a mobile terminal 11 operated by the user to communicate with the main apparatus 12. Thus, by having information read in from the non-contact IC card 71 by the mobile terminal 11 operated by the user, the mobile terminal 11 is capable of communicating with the main apparatus 12 serving as the base main apparatus, and a value can be transferred. In addition, the series of processes described above can be carried out by mounting the non-contact IC card 71 on the mobile terminal 11 in a one-touch operation. It is thus possible to provide an added value with a high degree of convenience.

On top of that, by providing the main apparatus 12, which serves as the base main apparatus for managing authentication information and personal information accompanying the authentication information as the personal information of the user, for example as a home server installed at the home of the user separately from the mobile terminal 11, the relation between the user and the mobile terminal 11 is not a relation of interdependence. That is to say, the user needs to be authenticated only when the user wants to utilize a resource. Furthermore, the personal information of the user is by no means managed by the value issuance apparatus 14. Instead, the personal information of the user is merely stored in the base main apparatus 12 for a mobile terminal 11 operated by the user. Thus, only value settlement information needs to be exchanged between the main apparatus 12 and the value issuance apparatus 14. Moreover, even when the user moves to another communication space, the user is capable of operating an apparatus or resource existing in the movement-destination communication space at operability adjusted to favorites of the user and with the anonymity kept as it is.

In addition, according to the communication system 1 shown in Fig. 1, the user operates the mobile terminal 11-2 existing in a movement-destination communication space so as to enable the main apparatus 12-2 serving as its base main apparatus for managing personal information of the user operating the mobile terminal 11-2 to make a payment of an electronic value to the main apparatus 12-1 of another user with the value issuance apparatus 14 serving as a mediator between the main apparatus 12-1 and the main apparatus 12-2. With such a payment made to the main apparatus 12-1, the mobile terminal 11-2 is capable of obtaining a right to utilize a resource of the main apparatus 12-1 from the main apparatus 12-1 and, by showing the right to utilize a resource to the main apparatus 12-1, the user operating the mobile terminal 11-2 is capable of utilizing the resource with the anonymity kept as it is. That is to say, the value issuance apparatus 14 serves merely as a mediator between the main apparatus 12-1 and the main apparatus 12-2 to mediate a payment of an electronic value from the main apparatus 12-2 serving as the base main apparatus of the mobile terminal 11-2 to the main apparatus 12-1 of another user. It is only the main apparatus 12 that serves as an apparatus for managing personal information of the user. It is thus possible to provide a configuration in which the apparatus for setting electronic values is completely separated from the apparatus for managing personal information. Let us keep in mind that it is also possible to provide a configuration in which the mobile terminal 11-2 makes an access to the value issuance apparatus 14 in an attempt to utilize a resource of the main apparatus 12-1 as an access to make a payment of an electronic value to the main apparatus 12-1 so that the mobile terminal 11-2 is capable of utilizing the resource. In this configuration, however, while the anonymity of the user operating the mobile terminal 11-2 is protected against the main apparatus 12-1, the value issuance apparatus 14 accessed by the mobile terminal 11-2 will manage personal information of the user operating the mobile terminal 11-2.

On top of that, the mobile terminal 11-2 is capable of making an access to the main apparatus 12-2 serving as the base main apparatus of the mobile terminal 11-2 by way of the main apparatus 12-1 in order to obtain a right to utilize a desired resource at a location close to the resource.

In this case, as the mobile terminal 11, it is possible to use an extremely portable apparatus such as a PDA (Personal Digital Assistant), a portable computer, a cell phone, a wrist watch, a digital still camera and a digital video camera.

Examples of the resource that can be utilized by a mobile terminal 11 in a movement-destination communication space are an apparatus, information and a license issued for information.

The apparatus each utilized as a resource include a radio access point, a television set and a telephone set. As a typical case in which an apparatus is utilized as a resource, for example, the user in a movement-destination communication space utilizes a radio access point from the mobile terminal 11 operated by the user to connect the mobile terminal 11 to the Internet.

The information utilized as a resource includes contents managed by the main apparatus 12-1 implemented as a home server or a channel server and other information. As a typical case in which information is utilized as a resource, for example, the user in a movement-destination communication space watches and/or listens to a content stored in a channel server functioning as the main apparatus 12-1.

A license issued for information as a license to be utilized as a resource may be a key for decrypting the information in case the information is encrypted information. As a typical case in which a license issued for information is utilized as a resource, for example, the user operating a mobile terminal 11 acquires an encryption-key as a license to watch and/or listen to an encrypted content downloaded by way of a network in an operation to watch and/or listen to the content.

In the series of processes described above, the user operating the mobile terminal 11-1 is different from the user operating the mobile terminal 11-2. It is to be noted, however, that a transfer of an electronic value can be made between main apparatus of the same user or between mobile terminals owned by the same user.

The embodiments described above are further explained by giving more concrete implementations as follows.

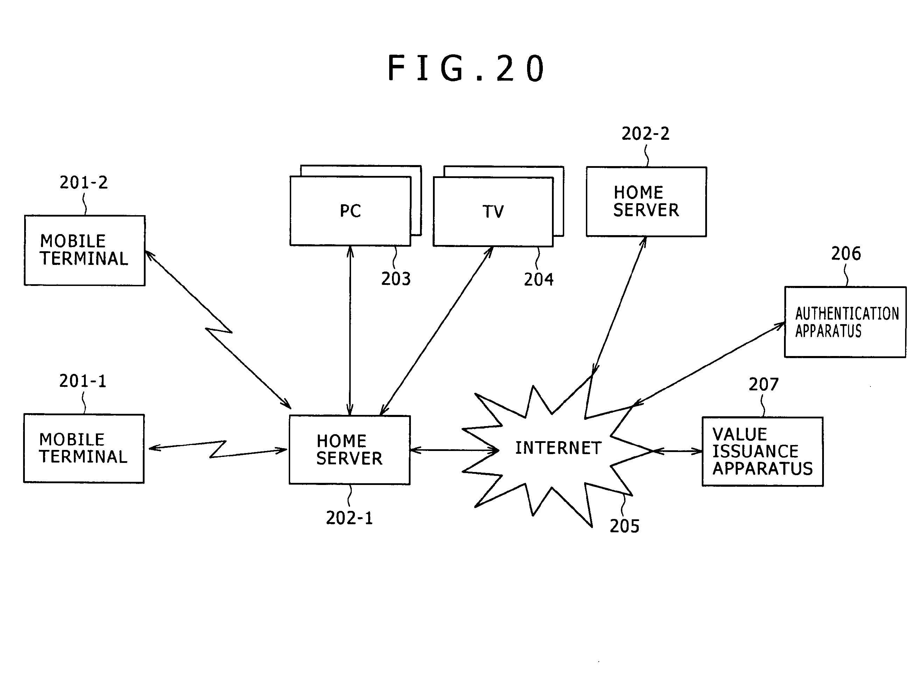

Fig. 20 is a block diagram showing a typical configuration of another information-processing system in which user B makes a payment of a price to user A because user B borrows a PC (Personal Computer) of user A at the home owned by user A. A mobile terminal 201-1 is an apparatus owned by user A while a mobile terminal 201-2 is an apparatus owned by user B. The mobile terminal 201-1 is a cell phone while the mobile terminal 201-2 is a portable CD player.

In the mobile terminal 201-1, the address of a home server 202-1 is cataloged and, in the mobile terminal 201-2, the address of a home server 202-2 is cataloged.

The home server 202-1 managed by user A manages a PC 203 and a TV (television set) 204, which are also managed by user A. The PC 203 and the TV 204 are each a resource connected to the home server 202-1 through a home network. In addition, the home server 202-1 is also used for storing personal information of user A.

By the same token, the home server 202-2 managed by user B is used for managing resources managed by user B and also storing personal information of user B. The home servers 202-1 and 202-2 are each designed into such a configuration that they are capable of communicating with other home servers by radio communication directly or through an access point, which is not shown in Fig. 20.

In addition, the mobile terminals 201-1 and 201-2 are each designed into such a configuration that they are capable of communicating with other home servers through the home servers 202-1 and 202-2 connected to the mobile terminal 201-1 and 201-2 as well as through the Internet 205.

An authentication apparatus 206 is also connected to the Internet 205. The authentication apparatus 206 is an apparatus managed by an institution issuing certificates for PKI processing as well as an apparatus for managing the certificates. A value issuance apparatus 207 is also connected to the Internet 205. The value issuance apparatus 207 is an apparatus for mediating transfers of values among servers. To be more specific, the value issuance apparatus 207 is an apparatus for carrying out processing involving payments of values.

The following description explains relations associating elements composing the information-processing system shown in Fig. 20 with elements composing the information-processing system shown in Fig. 1. The mobile terminal 201-1 corresponds to the mobile terminal 11-1 and the mobile terminal 201-2 corresponds to the mobile terminal 11-2. The home server 202-1 corresponds to the main apparatus 12-1 and the home server 202-2 corresponds to the main apparatus 12-2. The PC 203 corresponds to the resource apparatus 16-2 and the TV 204 corresponds to the resource apparatus 15-2.

The Internet 205 is the Internet 21 mentioned earlier. The authentication apparatus 206 and the value issuance apparatus 207 correspond to the authentication apparatus 13 and the value issuance apparatus 14 respectively. In this way, elements shown in Fig. 20 correspond to their respective counterparts shown in Fig. 1. Since items explained by referring to Fig. 1 and subsequent figures can be applied to the information-processing system shown in Fig. 20, portions of the information-processing system shown in Fig. 20, which have been explained before, are not described again.

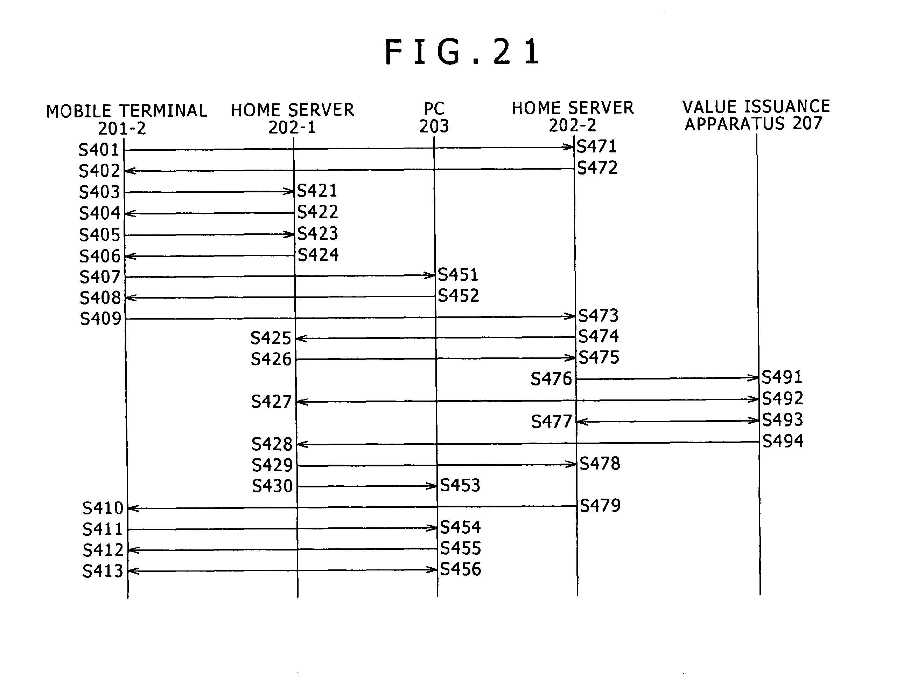

By referring to a flowchart shown in Fig. 21, the following description explains processing, which is carried out by the information-processing system shown in Fig. 20 when user B carrying the mobile terminal 201-2 visits the home of user A and uses the PC 203 installed at the home of user A as a resource managed by user A. It is to be noted that, in the following description, a procedure executed by the authentication apparatus 206, which functions as an authentication office, as a PKI process to recognize reliability of accesses made by users is not explained again to avoid duplications.

First of all, processing related to initialization of a mobile terminal is carried out. In this case, the processing related to initialization of the mobile terminal is carried out as a process between the mobile terminal 201-2 and the home server 202-2. The processing related to initialization of the mobile terminal begins with a step S401 at which the mobile terminal 201-2 carried by user B makes an access to the home server 202-2.

The home server 202-2 accessed by the mobile terminal 201-2 in a process carried out at a step S471 transmits personal information of user B as personal information managed by the home server 202-2 to the mobile terminal 201-2 in a process carried out at the next step S472. In a process carried out at a step S402, the mobile terminal 201-2 receives the personal information and stores the information in a memory.

Since the mobile terminal 201-2 holds the address of the home server 202-2, the mobile terminal 201-2 is capable of making an access to the home server 202-2. In addition, user B is cataloged in the mobile terminal 201-2, which can be utilized by user B only. For example, the fingerprint of user B is cataloged in the mobile terminal 201-2 so that the mobile terminal 201-2 cannot be activated unless an authentication process based on the fingerprint is carried out before the activation.

Then, after an authentication process such as the authentication process based on the fingerprint is carried out, that is, after user B is authenticated as a valid user in this case, the mobile terminal 201-2 is put in a state of being usable. After the mobile terminal 201-2 is put in a state of being usable and the mobile terminal 201-2 is capable of making an access to the home server 202-2, the processing described above is carried out by exchanging information between the mobile terminal 201-2 and the home server 202-2.

After a point of time the mobile terminal 201-2 holds the personal information of user B, in a process carried out at a step S403, the mobile terminal 201-2 periodically transmits a request for device search to the home server 202-1. In a process carried out at a step S421, the home server 202-1 receives the device-search request transmitted by the mobile terminal 201-2. Then, in a process carried out at the next step S422, the home server 202-1 transmits information to the mobile terminal 201-2. The information transmitted by the home server 202-1 to the mobile terminal 201-2 includes the address of the home server 202-1, an ID temporarily assigned to the terminal making the request for device search and information required by the mobile terminal 201-2 to exchange data with other apparatus by way of the Internet 205. In this case, the terminal making the request for device search is the mobile terminal 201-2 itself and an example of the information required by the mobile terminal 201-2 to exchange data with other apparatus by way of the Internet 205 is the address of a default router.

In a process carried out at a step S404, the mobile terminal 201-2 receives the information transmitted by the home server 202-1 and stores the information in a memory. Then, in a process carried out at the next step S405, the mobile terminal 201-2 transmits a request for a resource to the home server 202-2. The mobile terminal 201-2 is capable of transmitting a request for a resource to the home server 202-2 because, in a previous process, the mobile terminal 201-2 acquired and stored the address of the home server 202-2 so that the mobile terminal 201-2 has been put in a state of being capable of communicating with the home server 202-2. It is to be noted that the ID received from the home server 202-1 can also be used in the communication if necessary.

In a process carried out at a step S423, the home server 202-1 receives the request for a resource from the mobile terminal 201-2. Then, in a process carried out at the next step S424, the home server 202-1 transmits information on resources managed by the home server 202-1 itself to the mobile terminal 201-2. The information on resources is transmitted by the home server 202-1 to the mobile terminal 201-2 as a notice informing the mobile terminal 201-2 of available resources.

The information on each resource includes the name of the resource, the installation location of the resource, status indicating whether or not the resource is being utilized, a price to utilize the resource and a list of operations that can be carried out on the resource. As an example, the PC 203 is connected to the home server 202-1 as shown in Fig. 20. In this case, the information on a resource for the PC 203 includes 'PC203' as the name of the resource, a living room as the installation location of the PC 203, being available as the status, 100 yen as a typical price to utilize the PC 203 and a list of operations that can be carried out on the PC 203 from the mobile terminal 201-2.

Similar information on a resource can be created also for the TV 204 connected to the home server 202-1. The resource information created for the TV 204 is also transmitted to the mobile terminal 201-2 along with the resource information created for the PC 203.

In a process carried out at a step S406, the mobile terminal 201-2 receives information on resources from the home server 202-1 and stores the information in a memory.

Then, the mobile terminal 201-2 receiving information on resources from the home server 202-1 carries out the following processing to select a desired resource.

First of all, as a matter of course, the mobile terminal 201-2 displays information on resources to the user on the basis of the resource information received from the home server 202-1. The mobile terminal 201-2 displays the information on resources to the user by adoption of any method. Let us assume that the mobile terminal 201-2 has a configuration like the one shown in Fig. 2. As shown in the figure, the configuration includes a display section 64. Thus, in this case, the mobile terminal 201-2 displays the information on resources to the user on the display section 64. To put it concretely, to begin with, a list of resources is displayed on the display section 64. In the case of this embodiment, the PC 203 and the TV 204 are displayed. Looking at the displayed list, user B selects a desired resource, which is either the PC 203 or the TV 204 in this case. As user B specifies the desired resource, the screen of the display section 64 is switched to a display showing detailed information on the selected resource.

As described above, the mobile terminal 201-2 is notified of information of resources by the home server 202-1 and presents the information to the user step by step to eventually display detailed information on the selected resource.

As another method to display the information on resources, a close direct communication with a selected resource such as the PC 203 is carried out to obtain detailed information on the selected resource. For example, first of all, in a process carried out at the step S407, the mobile terminal 201-2 carries out a close direct communication with the PC 203 to make a request for information on the PC 203.

In a process carried out at a step S451, the PC 203 receives the request for information on the PC 203 from the mobile terminal 201-2. Then, in a process carried out at the next step S452, the PC 203 transmits detailed information on itself to the mobile terminal 201-2. The detailed information typically includes a required utilization fee to use the PC 203. In a process carried out at a step S408, the mobile terminal 201-2 displays the information received from the PC 203 to user B.

In accordance with either procedure, information of resources is transmitted to the mobile terminal 201-2 to be displayed on the display section 64 and, as a result, user B looks at the displayed information to select a desired resource, which is an apparatus in this case. In the following description, it is assumed that user B selects the PC 203 as a desired apparatus.

When user B selects the PC 203 as a desired apparatus, the display section 64 employed in the mobile terminal 201-2 displays a message asking a question saying: "Are you willing to utilize the PC 203 at a utilization fee of 100 yen per hour?" The query message is displayed to make user B recognize the utilization fee to be paid in order to utilize the PC 203 owned by user A. Looking at the query message, user B may make a decision to pay the utilization fee in order to utilize the PC 203 owned by user A. In this case, user B carries out a predetermined operation for example by operating a YES button appearing on the display section 64. It is to be noted that the YES button is shown in none of the figures.

When such an operation is carried out, in a process performed at a step S409, the mobile terminal 201-2 transmits information on a desired resource and the address of a home server managing the desired resource to the home server 202-2. In this case, the desired resource is the PC 203 and the home server managing the PC 203 is the home server 202-1. In a process performed at a step S473, the home server 202-2 receives the information on the desired resource and the address of a home server from the mobile terminal 201-2. Then, in a process carried out at the next step S474, the home server 202-2 transmits a utilization condition to the home server 202-1 in order to make a request for utilization of a resource. The utilization condition includes a condition specifying a utilization period of typically 1 hour.

In a process carried out at a step S425, the home server 202-1 receives the notice of the utilization condition from the home server 202-2. Then, in a process carried out at the next step S426, on the basis of information stored in the home server 202-1 as information on resources such as apparatus, the home server 202-1 computes a price to be paid by user B as a price to utilize the resource for the utilization period specified by the home server 202-2, and transmits the price obtained as a result of the computation to the home server 202-2 along with a transaction number. In this example, the utilization period specified by the home server 202-2 is 1 hour and, thus, the price is 100 yen (= 1 hour × 100 yen / hour).

In a process carried out at a step S475, the home server 202-2 receives the price and the transaction number from the home server 202-1. Then, in a process carried out at the next step S476, the home server 202-2 requests the value issuance apparatus 207 to make a payment of a value to the home server 202-1, specifying the transaction number. In a process carried out at a step S491, the value issuance apparatus 207 receives the request from the home server 202-2 and carries out a processing to make the payment of a value to the home server 202-1 in conjunction with the home server 202-1 at steps S492 and S427.

The value issuance apparatus 207 also carries out a processing to withdraw a value from the home server 202-2 in conjunction with the home server 202-2 at steps S493 and S477. In this way, the value issuance apparatus 207 carries out a processing to make a payment of a value to the home server 202-1 by withdrawing the value from the home server 202-2 and adding the withdrawn value to the home server 202-1.

If the value withdrawal and payment processes are carried out normally, in a process carried out at a step S494, the value issuance apparatus 207 transmits a notice indicating normal termination of the transaction to the home server 202-1 along with the transaction number.

In a process carried out at a step S428, the home server 202-1 receives the notice and the transaction number from the value issuance apparatus 207. Then, in a process carried out at the next step S429, on the basis of the transaction number, the home server 202-1 issues information on an apparatus, the utilization of which has been requested and permitted, a condition for utilizing the apparatus and a right to utilize the apparatus to the home server 202-2. Subsequently, in a process carried out at the next step S430, the home server 202-1 transmits the information on the apparatus, the condition for utilizing the apparatus and the right to utilize the apparatus also to the PC 203.

In a process carried out at a step S478, the home server 202-2 receives the information on the apparatus, the condition for utilizing the apparatus and the right to utilize the apparatus from the home server 202-1. Then, in a process carried out at the next step S479, the home server 202-2 hands over the right to utilize the apparatus to the mobile terminal 201-2.

In a process carried out at a step S410, the mobile terminal 201-2 receives the right to utilize the apparatus from the home server 202-2. Then, in a process carried out at the next step S411, the mobile terminal 201-2 shows the right to utilize the apparatus, which is the PC 203 in this case, to the PC 203. The mobile terminal 201-2 may show the right to utilize the apparatus to the PC 203 through the home server 202-1 or directly by a short-distance radio communication or the like. In a process carried out at a step S455, examining the right to utilize the PC 207 as the apparatus utilization right presented by the mobile terminal 201-2, first of all, the PC 207 produces a result of determination as to whether or not the apparatus utilization right handed over by the home server 202-1 matches the apparatus utilization right shown by the mobile terminal 201-2.

If the result of the determination indicates that the apparatus utilization rights match each other, in a process carried out at a step S455, the PC 207 notifies the mobile terminal 201-2 of a right to make accesses to the PC 207. It is to be noted that, if the result of the determination indicates that the apparatus utilization rights do not match each other, on the other hand, the PC 207 does not notify the mobile terminal 201-2 of a right to make accesses to the PC 207. As an alternative, the PC 207 notifies the mobile terminal 201-2 that a right to make accesses to the PC 207 is not granted to the mobile terminal 201-2.

After the PC 207 notifies the mobile terminal 201-2 of a right to make accesses to the PC 207 or after the mobile terminal 201-2 is notified of the right to make accesses to the PC 207, the PC 207 and the mobile terminal 201-2 are put in a state of being capable of exchanging data with each other. That is to say, the PC 207 is put in a state of accepting operation commands from the mobile terminal 201-2. With the mobile terminal 201-2 put in a state of being capable of giving an operation command to the PC 207, the mobile terminal 201-2 notifies the PC 207 of information for making the PC 207 operable in a configuration reflecting favorites of user B, who is the owner of the mobile terminal 201-2.

That is to say, in a process carried out at a step S413, the mobile terminal 201-2 notifies the PC 207 of information on favorites of user B managing the mobile terminal 201-2. Receiving the information on such favorites, the PC 207 constructs an environment customized to user B on the basis of the received information. An example of the information on favorites is information on a log-in screen, which is always used by user B. If the PC 207 is notified of such information, the PC 207 will show the screen on the display screen of the PC 207 at a log-in time. It is to be noted that the display screen of the PC 207 is shown in none of the figures.

As described above, by applying the present invention, an apparatus managed by another user can be utilized by paying a price to utilize the apparatus.

It is also worth noting that, in this specification, steps of every flowchart described above do not have to be carried out in a pre-prescribed order along the time axis, but they can also be performed concurrently or individually.

It is also to be noted that the technical term 'system' used in this specification implies the configuration of a confluence including a plurality of apparatus.

### Industrial Applicability

In accordance with the present invention, particularly, when a user moves to a movement-destination space, the user is allowed to utilize another apparatus in the space with anonymity of the user kept as it is. In addition, a payment of a price to utilize the other apparatus can be made automatically. On top of that, safety communications can be carried out with a high degree of convenience.

## Claims

1. An information-processing system comprising:
a terminal operated by a user;
a first main apparatus for providing a resource;
a second main apparatus for storing personal information of said user; and
a value apparatus for managing electronic values; wherein;
said terminal comprises:
resource-request signal sender means for transmitting a signal making a request for a resource provided by said first main apparatus to said second main apparatus; and
first utilization-right acquisition means for acquiring a right to utilize a resource provided by said first main apparatus from said second main apparatus; and
said terminal shows said right to utilize a resource provided by said first main apparatus to said first main apparatus before using said resource;
said first main apparatus comprises:
payment-notification receiver means for receiving a payment notification from said value apparatus as a notification informing said first main apparatus that an electronic value representing a price to utilize a resource has been paid from said second main apparatus as an electronic-value payment to said first main apparatus; and
utilization-right issuance means for issuing a right to utilize a resource to said second main apparatus in accordance with said payment notification; and
said first main apparatus allows said terminal to utilize a resource provided by said first main apparatus when said terminal shows a right to utilize said resource;
said second main apparatus comprises:
electronic-value payment request means for requesting said value apparatus to make an electronic-value payment for an electronic value to said first main apparatus in accordance with a signal received from said terminal as a signal making a request for a resource;
second utilization-right acquisition means for acquiring a utilization right, which is issued by said first main apparatus as a right to utilize a resource, in accordance with an electronic-value payment; and
utilization-right presentation means for providing a utilization right acquired by said second utilization-right acquisition means as a right to utilize a resource to said terminal; and
said value apparatus comprises:
electronic-value payment means for making an electronic-value payment to said first main apparatus in accordance with a request received from said second main apparatus; and
payment-notification sender means for transmitting a payment notification to said first main apparatus to notify said first main apparatus of said electronic-value payment.

2. An information-processing apparatus operated by a user, said apparatus comprising:
resource-request signal sender means for transmitting a signal making a request for a resource provided by a first main apparatus, which is used for providing said resource, to a second main apparatus for storing personal information of said user; and
utilization-right acquisition means for acquiring a right to utilize a resource provided by said first main apparatus from said second main apparatus, wherein
said right to utilize a resource is shown to said first main apparatus before said resource provided by said first main apparatus can be utilized.

3. The information-processing apparatus according to claim 2, further including authentication means for authenticating said user in conjunction with said second main apparatus as a valid user corresponding to personal information stored in said second main apparatus.

4. The information-processing apparatus according to claim 2 wherein said resource-request signal sender means and said utilization-right acquisition means exchange information with said second main apparatus through said first main apparatus.

5. The information-processing apparatus according to claim 2 wherein said resource-request signal sender means and said utilization-right acquisition means exchange data with said second main apparatus by encrypting said data.

6. The information-processing apparatus according to claim 2 wherein said resource is an apparatus, information, or a license issued for information.

7. An information-processing method adopted by an information-processing apparatus operated by a user, said method comprising the steps of:
transmitting a signal making a request for a resource provided by a first main apparatus, which is used for providing said resource to said information-processing apparatus, to a second main apparatus for storing personal information of said user; and
acquiring a right to utilize a resource provided by said first main apparatus from said second main apparatus; wherein
said right to utilize a resource is shown to said first main apparatus before said resource provided by said first main apparatus can be utilized.

8. A program to be executed by an information-processing apparatus operated by a user, said program comprising the steps of:
transmitting a signal making a request for a resource provided by a first main apparatus, which is used for providing said resource, to a second main apparatus for storing personal information of said user; and
acquiring a right to utilize a resource provided by said first main apparatus from said second main apparatus; wherein
said right to utilize a resource provided by said first main apparatus is shown to said first main apparatus before said resource provided by said first main apparatus can be utilized.

9. An information-processing apparatus for providing a resource to a terminal operated by a user, said apparatus comprising:
payment-notification receiver means for receiving a payment notification from a value apparatus for managing electronic values as a notification informing said information-processing apparatus that an electronic value representing a price to utilize a resource has been paid from a main apparatus for storing personal information of said user as an electronic-value payment to said information-processing apparatus; and
utilization-right issuance means for issuing a right to utilize a resource provided by said information-processing apparatus to said main apparatus in accordance with said payment notification; wherein
a terminal is allowed to utilize a resource provided by said information-processing apparatus if said terminal shows a right obtained from said main apparatus to said information-processing apparatus.

10. The information-processing apparatus according to claim 9, further including authentication means for authenticating said value apparatus in conjunction with said value apparatus as a valid apparatus authorized to manage said electronic value.

11. The information-processing apparatus according to claim 9, further including other authentication means for authenticating said payment notification as a valid notification.

12. The information-processing apparatus according to claim 9 wherein said resource can be an apparatus, information, or a license issued for information.

13. An information-processing method adopted by an information-processing apparatus for providing a resource to a terminal operated by a user, said method comprising the steps of:
receiving a payment notification from a value apparatus for managing electronic values as a notification informing said information-processing apparatus that an electronic value representing a price to utilize a resource has been paid from a main apparatus for storing personal information of said user as an electronic-value payment to said information-processing apparatus; and
issuing a right to utilize a resource provided by said information-processing apparatus to said main apparatus in accordance with said payment notification; wherein
a terminal is allowed to utilize a resource provided by said information-processing apparatus if said terminal shows a right obtained from said main apparatus to said information-processing apparatus.

14. A program to be executed by an information-processing apparatus for providing a resource to a terminal operated by a user, said program comprising the steps of:
receiving a payment notification from a value apparatus for managing electronic values as a notification informing said information-processing apparatus that an electronic value representing a price to utilize a resource has been paid from a main apparatus for storing personal information of said user as an electronic-value payment to said information-processing apparatus; and
issuing a right to utilize a resource provided by said information-processing apparatus to said main apparatus in accordance with said payment notification; wherein
a terminal is allowed to utilize a resource provided by said information-processing apparatus if said terminal shows a right obtained from said main apparatus to said information-processing apparatus.

15. An information-processing apparatus for storing personal information of a user operating a terminal, said apparatus comprising:
electronic-value payment request means for requesting a value apparatus for managing electronic values to make an electronic-value payment, which is a payment for an electronic value representing a price to provide a resource from a main apparatus for providing said resource to said terminal, to said main apparatus in accordance with a request made by said terminal;
utilization-right acquisition means for acquiring a utilization right, which is issued by said main apparatus as a right to utilize a resource provided by said main apparatus, in accordance with an electronic-value payment; and
utilization-right presentation means for providing a utilization right acquired by said utilization-right acquisition means as a right to utilize a resource to said terminal.

16. The information-processing apparatus according to claim 15, further including authentication means for authenticating said value apparatus in conjunction with said value apparatus as a valid apparatus authorized to manage said electronic value.

17. The information-processing apparatus according to claim 15, further including other authentication means for authenticating said user in conjunction with said terminal as a valid user corresponding to said personal information.

18. The information-processing apparatus according to claim 15 wherein said resource can be an apparatus, information, or a license issued for information.

19. An information-processing method adopted by an information-processing apparatus for storing personal information of a user operating a terminal, said method comprising the steps of:
requesting a value apparatus for managing electronic values to make an electronic-value payment, which is a payment for an electronic value representing a price to provide a resource from a main apparatus for providing said resource to said terminal, to said main apparatus in accordance with a request made by said terminal;
acquiring a utilization right, which is issued by said main apparatus as a right to utilize a resource provided by said main apparatus, in accordance with an electronic-value payment; and
providing a utilization right acquired in a process carried out at said utilization-right acquisition step as a right to utilize a resource to said terminal.

20. A program to be executed by an information-processing apparatus for storing personal information of a user operating a terminal, said program comprising the steps of:
requesting a value apparatus for managing electronic values to make an electronic-value payment, which is a payment for an electronic value representing a price to provide a resource from a main apparatus for providing said resource to said terminal, to said main apparatus in accordance with a request made by said terminal;
acquiring a utilization right, which is issued by said main apparatus as a right to utilize a resource provided by said main apparatus, in accordance with an electronic-value payment; and
providing a utilization right acquired in a process carried out at said utilization-right acquisition step as a right to utilize a resource to said terminal.

21. An information-processing apparatus for managing electronic values, said apparatus comprising:
electronic-value payment means for making an electronic-value payment to a first main apparatus for providing a resource to a terminal operated by a user as a payment, which is made for a price to provide said resource from said first main apparatus to said terminal, in accordance with a request made by a second main apparatus for storing personal information of said user; and
payment-notification sender means for transmitting a payment notification to said first main apparatus to notify said first main apparatus of said electronic-value payment made to said first main apparatus from said second main apparatus.

22. The information-processing apparatus according to claim 21, further including authentication means for authenticating said information-processing apparatus itself in conjunction with said first and second main apparatus as a valid apparatus for managing said electronic values.

23. The information-processing apparatus according to claim 21, further including storage means for storing electronic values of said first and second main apparatus, wherein said electronic-value payment means makes an electronic-value payment from said second main apparatus to said first main apparatus by renewing electronic values stored in said storage means.

24. The information-processing apparatus according to claim 21 wherein said electronic-value payment means is also capable of making an electronic-value payment from said second main apparatus to said first main apparatus by acquiring an electronic value from said second main apparatus and transferring said acquired electronic value to said first main apparatus.

25. The information-processing apparatus according to claim 21 wherein said resource can be an apparatus, information, or a license issued for information.

26. The information-processing apparatus according to claim 21 wherein said electronic values are each managed in the form of an account managed by using an apparatus ID included in a certificate of each of said main apparatus or by using an ID associated with said apparatus ID.

27. An information-processing method adopted by an information-processing apparatus for managing electronic values, said method comprising the steps of:
making an electronic-value payment to a first main apparatus for providing a resource to a terminal operated by a user as a payment, which is made for a price to provide said resource from said first main apparatus to said terminal, in accordance with a request made by a second main apparatus for storing personal information of said user; and
transmitting a payment notification to said first main apparatus to notify said first main apparatus of said electronic-value payment made to said first main apparatus from said second main apparatus.

28. A program to be executed by an information-processing apparatus for managing electronic values, said program comprising the steps of:
making an electronic-value payment to a first main apparatus for providing a resource to a terminal operated by a user as a payment, which is made for a price to provide said resource from said first main apparatus to said terminal, in accordance with a request made by a second main apparatus for storing personal information of said user; and
transmitting a payment notification to said first main apparatus to notify said first main apparatus of said electronic-value payment made to said first main apparatus from said second main apparatus.
